# EUROPEAN PATENT SPECIFICATION

(11) **EP 3 364 487 B1**
(45) Date of publication and mention of the grant of the patent: **29.01.2020**
(21) Application number: 17188526.2
(22) Date of filing: 30.08.2017
(51) Int. Cl.: H01M 10/056, H01M 4/485, H01M 10/0525

(54) **SECONDARY BATTERY, COMPOSITE ELECTROLYTE, BATTERY PACK, AND VEHICLE**
SEKUNDÄRBATTERIE, VERBUNDELEKTROLYT, BATTERIEPACK UND FAHRZEUG
BATTERIE SECONDAIRE, ÉLECTROLYTE COMPOSITE, BLOC-BATTERIE ET VÉHICULE

(30) Priority: 21.02.2017 JP 2017030105
(43) Date of publication of application: 22.08.2018
(73) Proprietor: KABUSHIKI KAISHA TOSHIBA, Minato-ku Tokyo 105-8001 (JP)
(72) Inventor: Takami, Norio, Tokyo, 105-8001 (JP); Harada, Yasuhiro, Tokyo, 105-8001 (JP); Iwasaki, Takuya, Tokyo, 105-8001 (JP)
(74) Representative: Hoffmann Eitle

(56) References cited:
- EP-A1- 3 145 018
- CN-A- 104 393 336
- JP-A- 2004 111 229
- US-A1- 2016 104 891

## Description

### FIELD

Approaches of the present invention relate to a secondary battery, a composite electrolyte, a battery pack and a vehicle.

### BACKGROUND

Nonaqueous electrolyte batteries including a negative electrode containing a lithium metal, a lithium alloy, a lithium compound, or a carbonaceous material are expected as high-energy-density batteries. Thereby, the batteries are being exhaustively researched and developed. Lithium ion batteries which include a positive electrode containing LiCoO₂, LiNi_{1/3}Co_{1/3}Mn_{1/3}O₂, or LiMn₂O₄ as an active material, and a negative electrode containing a carbonaceous material that allows lithium ions to be inserted and extracted have been widely put to practical use. With regard to the negative electrode, metal oxides and alloys which are to be used in place of the carbonaceous material have been studied.

In the case of installing a battery, particularly, on a vehicle such as an automobile, materials for the negative electrode are desired to have excellent chemical and electrochemical stability, strength, and corrosion resistance to obtain cycle performance in a high-temperature environment, long reliability in high output, and safety. Furthermore, it is demanded that batteries have high performance in cold regions. It is required for these batteries to have high output performance and long-cycle life performance in a low-temperature environment. On the other hand, from the viewpoint of improving safety performance, the development of a solid electrolyte, nonvolatile electrolytic solution, and noninflammable electrolytic solution is underway. However, since the use of the solid electrolyte, nonvolatile electrolytic solution, or noninflammable electrolytic solution causes deteriorations in discharge rate performance, low-temperature performance, and long-cycle life performance of a battery, it has not been put to practical use yet. The research and development of a solid electrolyte such as an oxide solid electrolyte or a sulfide solid electrolyte to improve the ion conductivity of the solid electrolyte are underway. However, interface resistance between an electrode and a solid electrolyte is increased, which disadvantageously causes large deteriorations in discharge performance and low-temperature performance. Since the variation in the thickness of the solid electrolyte layer is larger than that of a separator such as a nonwoven fabric, self-discharge is apt to proceed when the thickness of the solid electrolyte layer is decreased in order to improve an energy density. These problems disturb the practical realization of the secondary battery including the solid electrolyte. JP2004111229A discloses a polymer electrolyte support for lithium ion secondary batteries comprising a non-woven fabric of polymer fibers (e.g. polypropylene) coated with inorganic particles (e.g. silica). The average diameter of said fibers is comprised between 0.1 and 20 mm. The concentration by weight of the fibers within the electrolyte is not disclosed.

### BRIEF DESCRIPTION OF DRAWINGS

FIG. 1 is a partially cutaway cross-sectional view of a secondary battery of an approach;
FIG. 2 is a side view of the battery of FIG. 1;
FIG. 3 is a cross-sectional view cut along a direction perpendicular to the extending direction of a terminal in the secondary battery of the approach;
FIG. 4 is an enlarged cross-sectional view of a part A of FIG. 3;
FIG. 5 is a cross-sectional view showing the other example of the secondary battery according to the approach;
FIG. 6 is a perspective view showing an example of a battery module including the secondary battery of the approach;
FIG. 7 is an exploded perspective view of a battery pack of an approach;
FIG. 8 is a block diagram showing an electric circuit of the battery pack of FIG. 7;
FIG. 9 is a schematic view showing an example of a vehicle including the secondary battery of the approach; and
FIG. 10 schematically shows another example of a vehicle according to an approach.

### DETAILED DESCRIPTION

According to one approach, a secondary battery includes a positive electrode active material-containing layer, a negative electrode active material-containing layer, and a composite electrolyte. The composite electrolyte is provided on the surface of at least one of the positive electrode active material-containing layer and the negative electrode active material-containing layer. The composite electrolyte contains 0.1% by weight to 10% by weight of polymer fibers, lithium-containing inorganic particles, and an organic electrolytic solution. The polymer fibers have an average diameter of 1 nm to 100 nm. The organic electrolytic solution contains lithium ions.

According to one approach, a composite electrolyte includes polymer fibers, lithium-containing inorganic particles, and an organic electrolytic solution. The polymer fibers have an average diameter of 1 nm to 100 nm. The content of the polymer fibers in the composite electrolyte is from 0.1% by weight to 10% by weight. The organic electrolytic solution contains lithium ions.

Another approach provides a battery pack including the secondary battery of the approach.

Another approach provides a vehicle including the battery pack of the approach.

### (First Approach)

A first approach provides a composite electrolyte containing 0.1% by weight to 10% by weight of polymer fibers having an average diameter of 1 nm to 100 nm, lithium-containing inorganic particles, and an organic electrolytic solution containing lithium ions.

Since the polymer fibers having an average diameter of 1 nm to 100 nm are nano-sized polymer fibers, the polymer fibers can be contained also in a subtle point in the composite electrolyte, for example, a small gap between the lithium-containing inorganic particles. Therefore, even when the content of the polymer fibers in the composite electrolyte is as small as 0.1% by weight to 10% by weight, the polymer fibers are uniformly dispersed throughout the composite electrolyte. As a result, even if the thickness of the layer of the composite electrolyte is decreased to, for example, 10 µm or less, a sparse portion can be reduced, so that the occurrence of a partial short circuit in a secondary battery can be suppressed, and self-discharge can be suppressed, which can provide an improvement in storage performance.

Since the polymer fibers having the average diameter has an excellent ability to hold an organic electrolytic solution containing lithium ions, the polymer fibers function as a lithium ion path between the lithium-containing inorganic particles. Therefore, the ion conductivity of the composite electrolyte is improved, which can provide a reduction in the internal resistance of the battery. As a result, discharge performances such as low-temperature performance and large current performance of the battery are improved.

Furthermore, since the composite electrolyte has excellent flexibility, the composite electrolyte can absorb and relieve stress due to expansion and shrinkage involving the insertion/extraction reaction of the lithium ions, which can suppress the occurrence of cracks in the composite electrolyte due to repetition of charge-and-discharge cycles.

Therefore, a secondary battery is provided, which has a suppressed internal short circuit and self-discharge and excellent low-temperature performance, large current performance, and cycle life performance.

The average diameter of the polymer fibers exceeding 100 nm makes it difficult to distribute the polymer fibers in the subtle point in the composite electrolyte. Since the specific surface area of the polymer fibers is insufficient, the amount of the organic electrolytic solution which can be held by the polymer fibers is decreased. As these results, the low-temperature performance and large current performance of the battery are deteriorated. The average diameter of the polymer fibers is desirably small. The average diameter of less than 1 nm causes insufficient dispersion of the fibers in an electrode, so that the organic electrolytic solution cannot be uniformly held.

The average diameter of the polymer fibers is more preferably 5 nm to 50 nm.

If the content of the polymer fibers exceeds 10% by weight even when the average diameter of the polymer fibers is 1 nm to 100 nm, the amount of the organic electrolytic solution is relatively decreased, so that the ion conductivity of the composite electrolyte is decreased, which causes deteriorations in the low-temperature performance and large current performance of the battery. The content of the polymer fibers of less than 0.1% by weight cannot provide the effect of the polymer fibers having an average diameter of 1 nm to 100 nm, which causes deteriorations in the storage performance, the low-temperature performance, and the large current performance. The content is more preferably 0.5% by weight to 5% by weight.

When the specific surface area of the lithium-containing inorganic particles measured by the BET adsorption method using N₂ is 10 m²/g to 500 m²/g, the lithium-containing inorganic particles have a large specific surface area, so that the contact area with the organic electrolytic solution is increased, which can provide an improvement in the ion conductivity of the composite electrolyte. This improves the low-temperature performance and large current performance of the secondary battery. The lithium-containing inorganic particles having a specific surface area within the above range are advantageously chemically stable against a polymer body containing lithium ions, an organic solvent (for example, propylene carbonate, ethylene carbonate, diethyl carbonate, and methylethyl carbonate or the like), and a polymer without causing problems such as the dissolution of the lithium-containing inorganic particles in the polymer body. The specific surface area is more preferably 50 m²/g to 500 m²/g or less.

By setting the content of the lithium-containing inorganic particles of the composite electrolyte to 85% by weight or more, a sparse portion is decreased even when the thickness of the composite electrolyte layer is decreased, so that self-discharge caused by a partial internal short circuit can be further suppressed. By setting the content of the lithium-containing inorganic particles of the composite electrolyte to 98% by weight or less, the amount of the organic electrolytic solution is relatively increased, and the ion conductivity of the composite electrolyte is improved, so that the large current performance and the low-temperature performance can be further improved. Therefore, by setting the content of the lithium-containing inorganic particles of the composite electrolyte to 85% by weight to 98% by weight, the self-discharge can be reduced, and the large current performance and the low-temperature performance can be improved. The content of the lithium-containing inorganic particles of the composite electrolyte is more preferably 90% by weight to 95% by weight.

Therefore, by setting the specific surface area of the lithium-containing inorganic particles measured by the BET adsorption method using N₂ to 10 m²/g to 500 m²/g, and the content of the lithium-containing inorganic particles of the composite electrolyte to 85% by weight to 98% by weight, further improvements in the storage performance, the low-temperature performance, and the large current performance can be achieved.

Since the lithium-containing inorganic particles contain lithium ion conductive inorganic solid electrolyte particles, the migration of the lithium ions in the composite electrolyte becomes easier. As a result, the low-temperature performance, large current performance, or cycle life performance of the battery is improved. By specifying the specific surface area and/or content of the lithium-containing inorganic particles containing the lithium ion conductive inorganic solid electrolyte particles within the above ranges, the storage performance, low-temperature performance, large current performance, or cycle life performance of the battery are further improved.

The polymer fiber may contain cellulose as its component. Since the polymer fiber contains cellulose as its component, the polymer fiber takes a whiskered nanofiber form, so that the polymer fiber is entangled in complicated manner in the composite electrolyte, and the polymer fiber is arranged in a three-dimensional network manner. As a result, the permeability of the organic electrolytic solution to the composite electrolyte is further improved, and the difference in the density of the composite electrolyte is reduced, so that the mechanical strength is increased. This further improves the storage performance, low-temperature performance, large current performance, and cycle life performance of the secondary battery. It is possible to reduce the producing cost of the battery. For the polymer fiber, a cellulose nanofiber is desirably used.

When the negative electrode active material-containing layer contains a titanium-containing oxide, a reduction in weight and a reduction in cost can be achieved. Since lithium dendrite can be avoided, the storage performance, low-temperature performance, large current performance, and cycle life performance of the secondary battery can be further improved.

The titanium-containing oxide contains at least one selected from the group consisting of a lithium titanium oxide having a spinel structure, a monoclinic titanium oxide, and a niobium titanium oxide, which can provide a secondary battery having excellent compatibility with a lead storage battery, storage performance, low-temperature performance, large current performance, and cycle life performance.

By applying the composite electrolyte to a secondary battery having a bipolar structure, a secondary battery can be achieved, which has a high voltage in one single battery without connecting a plurality of single batteries in series. Furthermore, the composite electrolyte can take a gel form, which can prevent a short circuit caused via the electrolytic solution in a bipolar cell. The secondary battery having a bipolar structure may include a current collector having a first surface and a second surface located on the opposite side of the first surface. The secondary battery desirably has a bipolar structure in which a positive electrode active material-containing layer is provided on the first surface of the current collector and a negative electrode active material-containing layer is provided on the second surface.

Hereinafter, a composite electrolyte will be described in detail.

The lithium-containing inorganic particles may be inorganic particles having no or low lithium ion conductivity or may be made of an inorganic solid electrolyte having high lithium ion conductivity. The kind of the lithium-containing inorganic particles to be used can be set to one kind or two kinds or more.

Examples of the inorganic particles having no or low lithium ion conductivity include a lithium aluminum oxide (for example, LiAlO₂, LiₓAl₂O₃ where 0 < x ≤ 1), a lithium silicon oxide, and a lithium zirconium oxide.

Examples of the lithium ion conductive inorganic solid electrolyte include an oxide solid electrolyte having a Garnett type structure. The oxide solid electrolyte having a Garnet type structure advantageously has high lithium ion conductivity and reduction resistance, and a wide electrochemical window. Examples of the oxide solid electrolyte having a Garnet type structure include Li₅₊ₓAₓLa₃₋ₓM₂O₁₂ (A is at least one element selected from the group consisting of Ca, Sr, and Ba; M is Nb and/or Ta; and x is preferably 0.5 or less (including 0)), Li₃M₂₋ₓL₂O₁₂ (M is Nb and/or Ta; L contains Zr; and x is 0.5 or less (including 0)), Li₇₋₃ₓAlₓLa₃Zr₃O₁₂ (x is preferably 0.5 or less (including 0)), and Li₇La₃Zr₂O₁₂. Among these, Li_{6.25}Al_{0.25}La₃Zr₃O₁₂, Li_{6.4}La₃Zr_{1.4}Ta_{0.6}O₁₂, Li_{6.4}La₃Zr_{1.6}Ta_{0.6}O₁₂, and Li₇La₃Zr₂O₁₂ have high ion conductivity, and are electrochemically stable, which advantageously have excellent discharge performance and cycle life performance. The fine particles having a specific surface area of 10 to 500 m²/g (preferably 50 to 500 m²/g) advantageously have chemical stability against an organic electrolytic solution containing an organic solvent.

Examples of the lithium ion conductive inorganic solid electrolyte include a lithium phosphate solid electrolyte having a NASICON type structure. The lithium phosphate solid electrolyte having a NASICON type structure has high stability against water, and therefore hardly dissolves in water. Examples of the lithium phosphate solid electrolyte having a NASICON type structure include LiM1₂(PO₄)₃, where M1 is at least one element selected from the group consisting of Ti, Ge, Sr, Zr, Sn and Al. Preferable examples thereof include Li₁₊ₓAlₓGe₂₋ₓ (PO₄)₃, Li₁₊ₓAlₓZr₂₋ₓ(PO₄)₃, and Li₁₊ₓAlₓTi₂₋ₓ(PO₄)₃. Here, x is preferably in 0 to 0.5. Each of the exemplified solid electrolytes has high ion conductivity and high electrochemical stability. Both the lithium phosphate solid electrolyte having a NASICON type structure and the oxide solid electrolyte having a Garnet type structure may be used as the lithium ion conductive inorganic solid electrolyte.

The lithium-containing inorganic particles may contain independent primary particles, secondary particles as an aggregate of the primary particles, or both the independent primary particles and the secondary particles.

The average size (average diameter) of the primary particles of the lithium-containing inorganic particles is desirably 0.01 µm to 0.5 µm. This range provides an improvement in the ion conductivity in the composite electrolyte, which provides improvements in discharge performance and low-temperature performance. The range is more preferably 0.05 µm to 0.3 µm.

Lithium-containing inorganic particles having a specific surface area of 10 to 500 m²/g measured by the BET adsorption method using N₂ are obtained by decreasing the average particle size (average particle diameter) of the primary particles to 0.1 µm or less, for example.

The organic electrolytic solution containing lithium ions is prepared, for example, by dissolving a lithium salt in a solvent containing an organic solvent.

Examples of the lithium salt include LiPF₆, LiClO₄, LiBF₄, LiCF₃SO₃, LiN(FSO₂)₂, and LiN(CF₃SO₂)₂. At least one lithium salt selected from the group consisting of LiPF₆, LiBF₄, and LiN(FSO₂)₂ improves ion conductivity to improve discharge performance.

The organic solvent desirably has a boiling point of 150°C or higher. Thereby, the durability and life performance in a high-temperature environment of the composite electrolyte can be improved.

The organic solvent desirably contains carbonates. Examples of the carbonates include cyclic carbonates and chain carbonates. Examples of the cyclic carbonates include ethylene carbonate (EC), propylene carbonate (PC), and butylene carbonate (BC). Examples of the chain carbonates include diethyl carbonate (DEC), methylethyl carbonate (MEC), and dimethyl carbonate (DMC). The use of propylene carbonate (PC), diethyl carbonate (DEC), and methylethyl carbonate (MEC) provides an improvement in low-temperature performance.

The organic solvent can contain another solvent other than the carbonates. Examples of the other solvent include γ-butyrolactone (GBL), α-methyl-γ-butyrolactone (MBL), phosphoric esters (for example, trimethyl phosphate (PO (OCH₃)₃), triethyl phosphate (PO(OC₂H₅)₃), tripropyl phosphate (PO (OC₃H₇)₃), and tributyl phosphate (PO(OC₄H₉)₃). When γ-butyrolactone or trimethyl phosphate is particularly used, an increase in ion conductive resistance in a low-temperature environment is suppressed, which can provide an improvement in discharge performance under low temperature (-30°C or lower).

The composite electrolyte may contain a polymer. The polymer is not particularly limited as long as it can provide a gel of an organic electrolytic solution which contain lithium ions. Both a chemical gelling agent and a physical gelling agent can be used. Examples thereof include polymers that can make a gel with carbonates such as polyacrylonitrile (PAN), polyethylene oxide (PEO), polyvinylidene fluoride (PVdF), and polymethyl methacrylate. When the compositing of the carbonates and polymer produces a gel of polymer electrolyte, the ion conductivity of the composite electrolyte is improved. A gel of polymer electrolyte containing polyacrylonitrile has high ion conductivity and has improved discharge performance and low-temperature performance, which is preferable. The percentage of the polymer in the composite electrolyte is preferably 1% by weight to 10% by weight. The deviation of the percentage from this range may cause degradations in low-temperature performance or discharge performance. The kind of the polymer can be set to one kind or two kinds or more. Since a sulfur component is dissolved when any kind of the above polymers is used in combination with sulfide solid electrolyte particles having high lithium ion conductivity, the combination of the sulfide solid electrolyte particles and the above polymers cannot be used.

At least a part of the surfaces of the lithium-containing inorganic particles is desirably covered with a layered material containing a polymer and an organic electrolytic solution containing lithium ions. The layered material may be gel-like. Thereby, the ion conductivity of the composite electrolyte can be further improved. As a result, it is possible to further improve the low-temperature performance and large current performance of the secondary battery.

The specific surface area of the lithium-containing inorganic particles is set to 10 to 500 m²/g measured by the BET adsorption method using N₂, and at least a part of the surfaces of the lithium-containing inorganic particles is covered with a layered material containing a polymer and an organic electrolytic solution containing lithium ions, which can further improve the ion conductivity of the composite electrolyte. This is considered to be because the migration of the lithium ions at the interface between the lithium-containing inorganic particles and the layered material becomes easy.

The composite electrolyte desirably further contains a binder. Thereby, the mechanical strength of the composite electrolyte can be increased. Examples of the binder include polyvinylidene fluoride (PVdF) and an acrylic binder. The content of the binder in the composite electrolyte is preferably 5% by weight or less (including 0% by weight). When the content of the binder exceeds this range, the ion conductivity of the electrolyte may be deteriorated to cause deterioration in discharge performance. The kind of the binder can be set to one kind or two kinds or more.

The composite electrolyte is preferably a gel electrolyte. The compositing of an organic electrolytic solution containing lithium ions with a polymer can provide a gel electrolyte. The gel electrolyte can cover at least a part of the surfaces of the lithium-containing inorganic particles. Preferably, the gel electrolyte uniformly covers the surfaces of the lithium-containing inorganic particles. A gel electrolyte containing an organic solvent having a boiling point of 150°C or higher is preferable. Thereby, the durability and life performance in a high-temperature environment of the composite electrolyte can be improved.

For example, the composite electrolyte is obtained by mixing an electrolytic composition which contains an organic electrolytic solution containing lithium ions, and a polymer with lithium-containing inorganic particles, and heat-treating the mixture if needed.

A method for measuring the content of the polymer fiber in the composite electrolyte will be described below. The composite electrolyte is pulverized using a mortar or the like. The pulverized product thus obtained is dispersed in water, and the polymer fiber and the lithium-containing inorganic particles are separated from each other by utilizing the difference in specific gravity. The polymer fiber in the supernatant is dried at 100°C for 12 hours, and the weight of the polymer fiber is measured to determine the content of the polymer fiber in the composite electrolyte.

The polymer fiber whose weight is measured by the above method is observed with a scanning electron microscope (SEM) at a magnification of 10,000 times, and widths at positions of 25%, 50%, and 75% of the total length of the polymer fiber in the field of view are measured. The average of the measured width values is taken as an average diameter to be determined. Measurement is performed on all the polymer fibers existing in the field of view.

A method for measuring the content rate of the lithium-containing inorganic particles in the composite electrolyte will be described below. The composite electrolyte can be subjected to thermogravimetry (TG) measurement up to 800°C, to measure the content rate of the lithium-containing inorganic particles from reductions in the weights of the organic solvent, polymer, and binder.

The composite electrolyte being a gel is confirmed as follows. The gel can be confirmed by applying pressure of 10 g/cm² to the composite electrolyte, and investigating the presence or absence of the leaching of an organic electrolytic solution.

The average primary particle size of the lithium-containing inorganic particles is measured by the following method. A laser diffraction particle size analyzer (SALD-300 manufactured by Shimadzu Corporation, or a device having a function equivalent to that of the analyzer) is used. First, about 0.1 g of a sample, a surfactant, and 1 to 2 mL of distilled water are placed in a beaker, and then thoroughly stirred. The solution is then injected into a stirring water vessel. The light intensity distribution is measured 64 times at an interval of 2 seconds, and the particle size distribution data is analyzed to measure the average primary particle size.

The BET specific surface area of the lithium-containing inorganic particles measured by the BET method based on N₂ adsorption is measured under the following conditions. 1 g of the lithium-containing inorganic particles is used as a sample. A BET specific surface area measuring device manufactured by Yuasa Ionics Inc. is used, and nitrogen gas is used as an adsorption gas.

When the composition of the composite electrolyte contained in the secondary battery, and the specific surface area of the lithium-containing inorganic particles or the like are confirmed, the composite electrolyte is removed from the secondary battery by the following method. The secondary battery is disassembled in a glove box filled with argon, and an electrode is removed. The composite electrolyte is peeled off from the removed electrode. Then, the composition or the like of the composite electrolyte is confirmed.

The composite electrolyte of the first approach contains 0.1% by weight to 10% by weight of polymer fibers having an average diameter of 1 nm to 100 nm, lithium-containing inorganic particles, and an organic electrolytic solution containing lithium ions, which makes it possible to provide a secondary battery having excellent storage performance, low-temperature performance, large current performance, and cycle life performance.

### (Second Approach)

A second approach provides a secondary battery including a positive electrode active material-containing layer, a negative electrode active material-containing layer, and a composite electrolyte. The composite electrolyte is disposed on the surface of at least one of the positive electrode active material-containing layer and the negative electrode active material-containing layer. Therefore, at least a part of the composite electrolyte may be disposed between the positive electrode active material-containing layer and the negative electrode active material-containing layer. The composite electrolyte of the first approach may be used for the composite electrolyte.

The secondary battery of the approach includes a nonaqueous electrolyte secondary battery and a bipolar type secondary battery. The secondary battery of the approach can be applied to various secondary batteries such as a rectangular-shaped, cylindrical-shaped, flat type, thin type, and coin type batteries. The secondary battery is preferably a secondary battery having a bipolar structure. Thereby, one secondary battery having the bipolar structure can have a voltage equivalent to that of a battery module in which a plurality of single batteries are connected in series. Since the composite electrolyte of the approach can take a gel form, it can prevent a short circuit caused via an electrolytic solution in a bipolar cell.

The nonaqueous electrolyte secondary battery can include a container member, a positive electrode housed in the container member and containing a positive electrode active material-containing layer, a negative electrode housed in the container member and containing a negative electrode active material-containing layer, and a composite electrolyte layer disposed on the surface of at least one of the positive electrode active material-containing layer and the negative electrode active material-containing layer.

The negative electrode, the positive electrode, the container member, and the composite electrolyte layer will be described.

### (Negative Electrode)

This negative electrode includes a negative electrode current collector and a negative electrode active material-containing layer supported on one or both surfaces of the current collector and containing an active material, an electroconductive agent, and a binder.

The negative electrode active material is not particularly limited as long as the negative electrode active material can allow lithium or lithium ions to be inserted in and extracted from. Examples thereof include a carbonaceous material, a graphitized material, a lithium alloy, a metal oxide, and a metal sulfide. The kind of the negative electrode active material to be used can be set to one kind or two kinds or more. The negative electrode active material preferably contains a titanium-containing oxide. Since an aluminum foil or an aluminum alloy foil can be used for a negative electrode current collector in place of a copper foil by using the titanium-containing oxide, a reduction in weight and a reduction in cost can be achieved. The titanium-containing oxide desirably has a lithium ion inserting-extracting potential of 1 to 3 V (vs.Li/Li⁺) with reference to a Li potential. Examples of the titanium-containing oxide satisfying this condition include a lithium titanium oxide, a titanium oxide, a niobium titanium oxide, and a sodium niobium titanium oxide. The titanium-containing oxide desirably contains at least one selected from group consisting of a lithium titanium oxide having a spinel structure, a monoclinic titanium oxide, and a niobium titanium oxide.

Examples of the lithium titanium oxide include a lithium titanium oxide having a spinel structure (for example, the general formula Li₄₊ₓTi₅O₁₂ (-1 ≤ x ≤ 3)), a lithium titanium oxide having a ramsdellite structure (for example, Li₂₊ₓTi₃O₇ (-1 ≤ x ≤ 3), Zi₁₊ₓTi₂O₄ (0 ≤ x ≤ 1), Li_{1.1+x}Ti_{1.8}O₄ (0 ≤ x ≤ 1), and Li_{1.07+x}Ti_{1.86}O₄ (0 ≤ x ≤ 1)).

Examples of the titanium oxide include a titanium oxide having a monoclinic structure (for example, an uncharged structure is TiO₂ (B)) and LiₓTiO₂ (0 ≤ x), a titanium oxide having a rutile structure (for example, an uncharged structure is TiO₂ and LiₓTiO₂ (0 ≤ x)), and a titanium oxide having an anatase structure (for example, an uncharged structure is TiO₂ and LiₓTiO₂ (0 ≤ x)).

Examples of the niobium titanium oxide include one represented by LiₐTiM_{b}Nb_{2±β}O_{7±σ} (0 ≤ a ≤ 5, 0 ≤ b ≤ 0.3, 0 ≤ β ≤ 0.3, 0 ≤ σ ≤ 0.3, and M is at least one element selected from the group consisting of Fe, V, Mo, and Ta).

Examples of the sodium niobium titanium oxide include an orthorhombic Na-containing niobium titanium composite oxide represented by the general formula Li₂₊ᵥNa_{2-w}M1ₓTi_{6-y-z}Nb_{y}M2_{z}O_{14+δ} (0 ≤ v ≤ 4, 0 < w < 2, 0 ≤ x < 2, 0 < y ≤ 6, 0 ≤ z < 3, -0.5 ≤ δ ≤ 0.5; M1 contains at least one selected from Cs, K, Sr, Ba, and Ca; and M2 contains at least one selected from Zr, Sn, V, Ta, Mo, W, Fe, Co, Mn, and Al).

The negative electrode active material is preferably a lithium titanium oxide having a spinel structure. The lithium titanium oxide having a spinel structure provides less volume change during charge and discharge. Since an aluminum foil or an aluminum alloy foil can be used for a negative electrode current collector in place of a copper foil, a reduction in weight and a reduction in cost can be achieved. Furthermore, the lithium titanium oxide having a spinel structure becomes advantageous to an electrode structure having a bipolar structure. The percentage of the negative electrode active material other than the titanium-containing oxide based on the whole negative electrode active material is desirably 50% by weight or less.

Particles made of the titanium-containing oxide may contain independent primary particles, secondary particles as an aggregate of the primary particles, or both the independent primary particles and the secondary particles.

The average particle size (average particle diameter) of the secondary particles can be set to 2 µm or more, and preferably more than 5 µm. More preferably, the average particle size is 7 to 20 µm. This range can produce a negative electrode having a high density while keeping the pressing force during producing the negative electrode low, and can suppress the stretch of an aluminum-containing current collector. The secondary particles made of the titanium-containing oxide are obtained by making an active material precursor having an average particle size of 1 µm or less by the reaction and synthesis of raw active materials, subjecting the active material precursor to a heat treatment, and then grinding treatment using a grinder such as a ball mill or a jet mill, and then aggregating the active material precursor in the heat treatment to grow it into secondary particles having a larger particle size.

The average particle size (diameter) of the primary particles is desirably set to 1 µm or less. As a result of this, this effect in high input performance (quick charge performance) is remarkable. The reason is due to that, for example, the diffusion distance of lithium ions in the active material is shortened, and the specific surface area is increased. The average particle size is more preferably 0.1 to 0.8 µm. In the negative electrode active material-containing layer, the secondary particles and primary particles made of the titanium-containing oxide may be mixed. From the viewpoint of further increasing the density, the percentage of the primary particles existing in the negative electrode active material-containing layer is preferably 5 to 50% by volume.

At least a part of the surfaces of the particles made of the titanium-containing oxide is desirably covered with a carbon material layer. Thereby, the resistance of the negative electrode can be reduced. At least a part of the surface of the particles made of the titanium-containing oxide can be covered with the carbon material layer by adding a carbon material precursor during producing the secondary particles, and performing heat treatment to the particles in an inert atmosphere at 500°C or higher.

It is desirable that the average primary particle size of the particles made of the titanium-containing oxide is 1 µm or less, and the specific surface area measured by the BET method based on N₂ adsorption is 3 to 200 m²/g. This can further improve the affinity of the negative electrode with the nonaqueous electrolyte.

The negative electrode current collector is desirably an aluminum foil or an aluminum alloy foil. The thicknesses of the aluminum foil and aluminum alloy foil are preferably 20 µm or less, and more preferably 15 µm or less. The purity of the aluminum foil may be 98% by weight to pure aluminum (purity: 100%), and preferably 99.99% by weight or more. Preferable examples of the aluminum alloy include aluminum alloys containing at least one element selected from the group consisting of iron, magnesium, manganese, zinc, and silicon. On the other hand, the content of transition metals such as nickel and chromium is preferably set to 100 weight ppm or less (including 0 weight ppm). For example, an Al-Fe alloy, an Al-Mn-based alloy, and an Al-Mg-based alloy can provide higher strength than that of aluminum. On the other hand, an Al-Cu-based alloy increases strength, but does not provide excellent corrosion resistance.

The aluminum purity of the current collector can be set to be 98% by weight to 99.95% by weight. Since the combination of the secondary particles made of the titanium-containing oxide with the negative electrode current collector having such an aluminum purity can provide a reduction in the pressing force of the negative electrode to decrease the stretch of the current collector, this purity range is suitable. As a result, the electron conductivity of the current collector can be advantageously improved.

Furthermore, the cracking of the secondary particles made of the titanium-containing oxide can be suppressed to produce a low-resistance negative electrode.

The specific surface area of the negative electrode is preferably 3 to 50 m²/g, more preferably 5 to 50 m²/g, and still more preferably 1 to 20 m²/g. This range suppresses the reductive decomposition of the nonaqueous electrolyte in a high-temperature environment to improve a cycle life. Herein, the specific surface area of the negative electrode means a surface area per 1 g of the negative electrode active material-containing layer (excluding the weight of the current collector). The negative electrode active material-containing layer may be a porous layer containing a negative electrode active material, an electroconductive agent, and a binder.

The porosity of the negative electrode (excluding the current collector) is desirably set to 20 to 50%. This makes possible to obtain a negative electrode having high affinity to the nonaqueous electrolyte and a high density. The porosity is more preferably 25 to 40%.

As the electroconductive agent, for example, a carbon material, a metal compound powder, and a metal powder or the like can be used. Examples of the carbon material include acetylene black, carbon black, coke, carbon fiber, and graphite. The carbon material preferably has a BET specific surface area of 10 m²/g or more based on N₂ adsorption. Examples of the metal compound powder include TiO, TiC, and TiN powders. Examples of the metal powder include Al, Ni, Cu, and Fe powders. Preferable examples of the electroconductive agent include coke heat-treated at a heat treatment temperature of 800°C to 2000°C and having an average particle size of 10 µm or less, graphite, acetylene black, carbon fibers having an average fiber diameter of 1 µm or less, and a TiO powder. One or more selected from these can achieve a reduction in electrode resistance and an improvement in cycle life performance. The kind of the electroconductive agent can be set to one kind or two kinds or more.

Examples of the binder include polytetrafluoroethylene (PTFE), polyvinylidene fluoride (PVdF), fluorine rubber, acrylic rubber, styrene butadiene rubber, a core-shell binder, and polyimide. The kind of the binder can be set to one kind or two kinds or more.

The proportions of the negative electrode active material, electroconductive agent, and binder are preferably as follows: the negative electrode active material: 80 to 95% by weight, the electroconductive agent: 3 to 18% by weight, and the binder: 2 to 7% by weight.

The negative electrode is produced, for example, by suspending negative electrode active material particles, an electroconductive agent, and a binder in a proper solvent, and applying this suspension to a current collector, followed by drying and pressing (pressing under heating).

The average primary particle size of the negative electrode active material is measured by the following method. A laser diffraction particle size analyzer (SALD-300 manufactured by Shimadzu Corporation, or a device having a function equivalent to that of the analyzer) is used. First, about 0.1 g of a sample, a surfactant, and 1 to 2 mL of distilled water are placed in a beaker, and then thoroughly stirred. The solution is then injected into a stirring water vessel. The light intensity distribution is measured 64 times at an interval of 2 seconds, and the particle size distribution data is analyzed to measure the average primary particle size.

### (Positive Electrode)

This positive electrode includes a positive electrode current collector and a positive electrode active material-containing layer supported on one or both surfaces of the current collector and containing an active material, an electroconductive agent, and a binder.

A positive electrode active material which can allow lithium or lithium ions to be inserted in and extracted from may be used. Examples of the positive electrode active material include a lithium manganese composite oxide, a lithium nickel composite oxide, a lithium cobalt aluminum composite oxide, a lithium nickel cobalt manganese composite oxide, lithium manganese nickel composite oxide having a spinel strucure, a lithium manganese cobalt composite oxide, a lithium iron oxide, lithium containing iron-based fluorosulfate, and a phosphate compound having an olivine crystal structure (for example, LiₓFePO₄ (0 ≤ x ≤ 1), and LiₓMnPO₄ (0 ≤ x ≤ 1)). The phosphate compound having an olivine crystal structure has excellent thermal stability.

Examples of a positive electrode active material providing a high positive electrode potential will be described below. Examples thereof include lithium manganese composite oxides such as LiₓMn₂O₄ (0 < x ≤ 1) and LiₓMnO₂ (0 < x ≤ 1), LiₓNi_{1-y}Al_{y}O₂ (0 < x ≤ 1, 0 < y ≤ 1), lithium cobalt composite oxides such as LiₓCoO₂ (0 < x ≤ 1), lithium composite oxides such as LiₓNi_{1-y-z}Co_{y}Mn_{z}O₂ (0 < x ≤ 1, 0 < y ≤ 1, 0 ≤ z ≤ 1), LiₓMn_{y}Co_{1-y}O₂ (0 < x ≤ 1, 0 < y ≤ 1), spinel type lithium manganese nickel composite oxides such as LiₓMn_{2-y}Ni_{y}O₄ (0 < x ≤ 1, 0 < y < 2), lithium phosphorus oxides having an olivine structure such as LiₓFePO₄ (0 < x ≤ 1), LiₓFe_{1-y}Mn_{y}PO₄ (0 < x ≤ 1, 0 ≤ y ≤ 1), LiₓCoPO₄ (0 < x ≤ 1), and iron-based fluorosulfate (for example, LiₓFeSO₄F (0 < x ≤ 1)).

The lithium nickel aluminum composite oxide such as LiₓNi_{1-y}Al_{y}O₂ (0 < x ≤ 1, 0 < y < 1), the lithium nickel cobalt manganese composite oxide, and the lithium manganese cobalt composite oxide such as LiₓMn_{y}Co_{1-y}O₂ (0 < x ≤ 1, 0 < y ≤ 1) can suppress the reaction with the nonaqueous electrolyte in a high-temperature environment, whereby the battery life can be markedly improved. The composite oxide which can be represented by LiₓNi_{1-y-z}Co_{y}Mn_{z}O₂ (0 ≤ x ≤ 1.1, 0 ≤ y ≤ 0.5, 0 ≤ z ≤ 0.5, more preferably 0 < x ≤ 1.1, 0 < y ≤ 0.5, 0 < z ≤ 0.5) is advantageous in terms of the durability life under high temperature.

As the positive electrode active material, there can be used a phosphate compound having an olivine structure which can be represented by LiₓFe_{1-y-z}Mn_{y}M_{z}PO₄ (M is at least one element selected from the group consisting of Mg, Al, Ti, and Zr, and 0 ≤ x ≤ 1.1, 0 ≤ y ≤ 1, and 0 ≤ z ≤ 0.2 are set). The positive electrode active material improves the thermal stability of the secondary battery to improve the cycle life performance of the secondary battery in a high-temperature environment. In LiₓFe_{1-y-z}Mn_{y}M_{z}PO₄, y is preferably 0.5 to 1, and more preferably 0.7 to 0.9. This range provides an increase in a positive electrode voltage, which provides an increase in an energy density and an improvement in electron conductivity to provide an improvement in large current performance. M is at least one element selected from the group consisting of Mg, Al, Ti, and Zr, and z is preferably 0 to 0.1, and more preferably 0.01 to 0.08, which suppresses the dissolution of Mn and Fe during a high temperature cycle (for example, 45°C or higher) to provide a large improvement in high temperature cycle performance.

The phosphate compound having an olivine structure which can be represented by LiₓFe_{1-y-z}Mn_{y}M_{z}PO₄ is preferably LiMn_{0.85}Fe_{0.1}Mg_{0.05}PO₄ and LiFePO₄. At least a part of the surfaces of particles made of a lithium phosphate compound having an olivine structure is preferably covered with a carbon material layer in order to provide low resistance and an improvement in life performance.

The particles made of the positive electrode active material may contain independent primary particles, secondary particles as an aggregate of the primary particles, and both the independent primary particles and the secondary particles.

The average particle size (diameter) of the primary particles made of the positive electrode active material is 1 µm or less, and more preferably 0.05 to 0.5 µm. At least a part of the surfaces of the particles made of the positive electrode active material is preferably covered with a carbon material. The carbon material can take a layer structure, a particle structure, or an aggregate form of particles.

Examples of a positive electrode current collector include an aluminum foil and an aluminum alloy foil. The aluminum purity of the positive electrode current collector can be set to from 99% by weight to pure aluminum (purity: 100%). The aluminum purity is more preferably from 99% by weight to 99.99% by weight. Within this range, deterioration in the high temperature cycle life caused by the dissolution of impurity elements can be reduced. An aluminum alloy is preferably an alloy containing an aluminum component and one or more elements selected from the group consisting of iron, magnesium, zinc, manganese, and silicon. For example, an Al-Fe alloy, an Al-Mn-based alloy, and an Al-Mg-based alloy can provide higher strength than that of aluminum. On the other hand, the content of transition metals such as nickel or chromium in each of the aluminum foil and aluminum alloy foil is preferably set to 100 weight ppm or less (including 0 weight ppm). An Al-Cu-based alloy has high strength, but has insufficient corrosion resistance.

Examples of the electroconductive agent for improving the electron conductivity and suppressing the contact resistance to the collector include acetylene black, carbon black, graphite, and carbon fibers having an average fiber diameter of 1 µm or less. The kind of the conductive agent can be set to one kind or two kinds or more.

Examples of the binder for binding the active material with the conductive agent include polytetrafluoroethylene (PTFE), polyvinylidene fluoride (PVdF), and fluorine rubber. The kind of the binder can be set to one kind or two kinds or more.

The proportions of the positive electrode active material, conductive agent, and binder are preferably as follows: the positive electrode active material: 80 to 95% by weight, the conductive agent: 3 to 18% by weight, and the binder: 2 to 7% by weight. When the proportion of the conductive agent is 3% by weight or more, the above-described effect can be achieved, and when 18% by weight or less, the decomposition of the nonaqueous electrolyte on the electroconductive agent surface during storage at high temperatures can be reduced. When the proportion of the binder is 2% by weight or more, sufficient electrode strength is provided, and when 7% by weight or less, the insulating part of the electrode can be decreased.

The positive electrode is produced, for example, by suspending positive electrode active material particles, an electroconductive agent, and a binder in a proper solvent, and applying this suspension to a positive electrode current collector, followed by drying and pressing. The positive electrode pressing force is preferably 0.15 ton/mm to 0.3 ton/mm. When the pressing force is within this range, adhesion (peel strength) between the positive electrode active material-containing layer and the aluminum-containing positive electrode current collector is increased, and the percent stretch of the positive electrode current collector is 20% or less, which is preferable.

### (Container Member)

Examples of the container member include a laminate film container and a metal container. The shape of the container conforms to the form of the secondary battery such as a nonaqueous electrolyte secondary battery. Examples of the form of the secondary battery such as the nonaqueous electrolyte secondary battery include flat, prismatic, cylindrical, coin, button, sheet, laminated, and large-size batteries mounted on electric vehicles.

The thickness of the laminate film is preferably 0.5 mm or less, and more preferably 0.2 mm or less. The lower limit of the thickness of the laminate film is desirably 0.01 mm.

On the other hand, the plate thickness of the metal container is preferably 0.5 mm or less, and more preferably 0.3 mm or less. The lower limit of the plate thickness of the metal container is preferably 0.05 mm.

Examples of the laminate film include a multilayer film including a metal layer and a resin layer for coating the metal layer. For reduction in weight, the metal layer is preferably an aluminum foil or an aluminum alloy foil. The purity of the aluminum foil is preferably 99.5% by weight or more. The resin layer is intended to reinforce the metal layer, and can be formed from polymers such as polypropylene (PP), polyethylene (PE), nylon, and polyethylene terephthalate (PET).

The laminate film container is obtained by, for example, sealing the laminate film through thermal fusion bonding.

As the metal container, a prismatic-shaped or cylindrical-shaped metal can made of aluminum, an aluminum alloy, iron or stainless steel can be used. The metal container is desirably made of aluminum or an aluminum alloy. The aluminum alloy is preferably an alloy containing at least one element selected from the group consisting of manganese, magnesium, zinc, and silicon. The aluminum purity of the alloy is preferably 99.8% by weight or less. The thickness of the can can be reduced by increasing the strength of the metal can made of an aluminum alloy. As a result, a thin, light-weight, and high power battery having an excellent heat releasing property can be achieved.

The metal container may be sealed by laser. As a result of this, the volume of the sealing part can be made less than that of the laminate film container, and the energy density can be improved.

The secondary battery may not include a separator.

The separator can be disposed between the positive electrode and the negative electrode. Examples of the separator include a non-woven fabric made of a synthetic resin, a porous film, and a non-woven fabric made of cellulose. The porous film can be made of polyolefin such as polyethylene or polypropylene.

The separator is preferably a non-woven fabric or porous film having a thickness of 30 µm or less and a porosity of 50% or more and containing cellulose and/or polyolefin. A separator made of a cellulose fiber and having a porosity of 60% or more is preferably used. The separator preferably has a fiber diameter of 10 µm or less. Examples of the form of the separator include a non-woven fabric, film, and paper. When the cellulose fiber separator has a porosity of 60% or more, the impregnation properties of the nonaqueous electrolyte are good. High output performance from low to high temperatures can be attained. The porosity is more preferably 62% to 80%. When the fiber diameter is set to 10 µm or less, the affinity of the separator with the nonaqueous electrolyte is improved. Thus, the battery resistance can be reduced. More preferably, the fiber diameter is 3 µm or less.

The separator preferably has a thickness of 20 to 100 µm and a density of 0.2 to 0.9 g/cm³. When these items are in the above ranges, the balance between mechanical strength and a reduction in battery resistance can be kept and therefore, a battery which has high output and is reduced in the development of an internal short circuit can be provided. The heat-shrinkage in a high-temperature environment is reduced and excellent high-temperature storage performance can be attained.

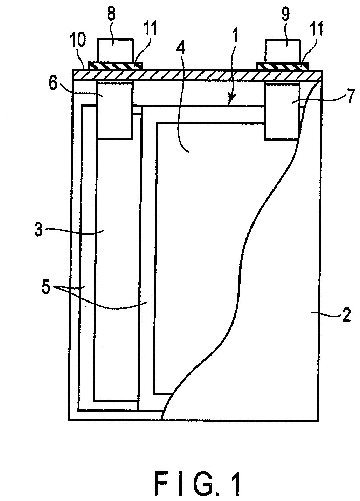

An example of a nonaqueous electrolyte secondary battery of an approach will be described with reference to FIGS. 1 to 5.

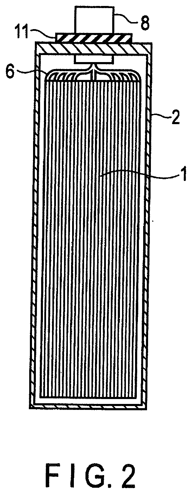

An example of a nonaqueous electrolyte secondary battery using a metal container is shown in FIGS. 1 and 2.

An electrode group 1 is housed in a rectangular cylindrical metal container 2. The electrode group 1 has a structure in which a composite electrolyte layer 5 is interposed between a positive electrode active material-containing layer of a positive electrode 3 and a negative electrode active material-containing layer of a negative electrode 4 and these are spirally wound to form a flat shape. The composite electrolyte layer 5 covers a surface of the positive electrode active material-containing layer or a surface of the negative electrode active material-containing layer. A separator holding a composite electrolyte can be used in place of the composite electrolyte layer. As shown in FIG. 2, strip-shaped positive electrode leads 6 are electrically connected at a plural places of the end of the positive electrode 3 which are located on the end surface of the electrode group 1. Strip-shaped negative electrode leads 7 are electrically connected at a plural places of the end of the negative electrode 4 which are located on the end surface. A bundle of the positive electrode leads 6 is electrically connected to a positive electrode conductive tab 8. A positive electrode terminal is formed of the positive electrode leads 6 and the positive electrode conductive tab 8. A bundle of the negative electrode leads 7 is connected to a negative electrode conductive tab 9. A negative electrode terminal is formed of the negative electrode leads 7 and the negative electrode conductive tab 9. A metal sealing plate 10 is fixed to the opening part of a metal container 2 by welding or the like. The positive electrode conductive tab 8 and the negative electrode conductive tab 9 are pulled out from pick-up holes formed in the sealing plate 10 to the outside. The inner periphery surface of each pick-up hole of the sealing plate 10 is covered with an insulating member 11 in order to prevent a short circuit due to the contact of the positive electrode conductive tab 8 and sealing plate 10 or the contact of the sealing plate 10 and negative electrode conductive tab 9.

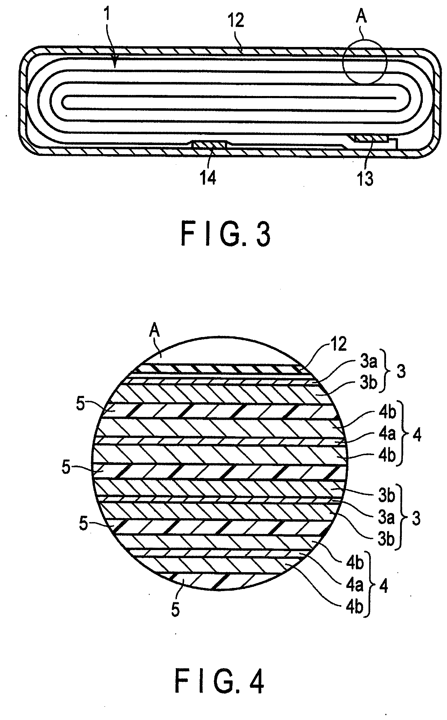

An example of a nonaqueous electrolyte secondary battery using a laminate film container member is shown in FIGS. 3 and 4.

As shown in FIGS. 3 and 4, a flat type wound electrode group 1 is housed in a baggy container member 12 made of a laminate film obtained by interposing a metal layer between two resin films. The wound electrode group 1 having a flat form is formed by, for example, spirally winding a laminate obtained by laminating a negative electrode 4, a composite electrolyte layer 5, a positive electrode 3, and a composite electrolyte layer 5 in this order from the outside, and press-molding the wound laminate. The outermost negative electrode 4 has a structure in which a negative electrode layer (negative electrode active material-containing layer) 4b containing a negative electrode active material is formed on one inside surface of a negative electrode current collector 4a as shown in FIG. 4. Another negative electrodes 4 each have a structure in which a negative electrode layer 4b is formed on each surface of the current collector 4a. The positive electrode 3 has a structure in which a positive electrode layer (positive electrode active material-containing layer) 3b is formed on each surface of the positive electrode current collector 3a.

In the vicinity of the outer peripheral end of the wound electrode group 1, a negative electrode terminal 13 is connected to the negative electrode current collector 4a of the outermost negative electrode 4, and a positive electrode terminal 14 is connected to the positive electrode current collector 3a of the inside positive electrode 3. The negative electrode terminal 13 and the positive electrode terminal 14 are externally extended from the opening part of the baggy container member 12. The wound electrode group 1 is sealed by heat-sealing the opening part of the baggy container member 12. When the opening part is heat-sealed, the negative electrode terminal 13 and the positive electrode terminal 14 are pinched by the baggy container member 12 in the opening part.

The composite electrolyte layer is produced by the following method, for example. Lithium-containing oxide particles are dispersed in a binder solution. The obtained dispersion liquid is applied or sprayed onto one surface or both surfaces of at least one electrode of the positive electrode and the negative electrode, and then dried to form a layer containing the lithium-containing oxide particles. An electrolytic composition which contains an organic electrolytic solution containing lithium ions, and a polymer is injected into the container in which the electrode group is housed, to impregnate the voids of the positive electrode and negative electrode with the electrolytic composition. Then, the composite electrolyte layer is formed between the positive electrode active material-containing layer and the negative electrode active material-containing layer by covering the opening part of the container with a sealing plate or placing the container in an inactive atmosphere without providing the sealing plate, and heat-treating the container at 60°C to 80°C.

The composite electrolyte layer can be formed by a method to be described later in place of the above method. A composition which contains lithium-containing inorganic particles, an organic electrolytic solution containing lithium ions, and a polymer is applied or sprayed onto one surface or both surfaces of at least one electrode of the positive electrode and the negative electrode, then dried, and heat-treated at 60°C to 80°C, to form the composite electrolyte layer between the positive electrode active material-containing layer and the negative electrode active material-containing layer.

Next, a secondary battery having a bipolar structure will be described. The secondary battery further includes a current collector having a first surface and a second surface positioned opposite to the first surface. As the current collector, the positive electrode current collector or negative electrode current collector that can be used for a nonaqueous electrolyte secondary battery can be used. The secondary battery has a bipolar structure in which a positive electrode active material-containing layer is provided on the first surface of the current collector and a negative electrode active material-containing layer is provided on the second surface. The composite electrolyte of the first approach exists between the positive electrode active material-containing layer and the negative electrode active material-containing layer. As a result, at least a part of the composite electrolyte is positioned between the positive electrode active material-containing layer and the negative electrode active material-containing layer. The similar positive electrode active material-containing layer and negative electrode active material-containing layer as those described in the nonaqueous electrolyte battery can be used.

The composite electrolyte of the first approach improves the ion conductivity of the secondary battery having the bipolar structure. Thereby, a high voltage secondary battery can be achieved by one single battery without connecting a plural single batteries in series. Furthermore, the composite electrolyte can take a gel-like form, which can prevent a short circuit caused via an electrolytic solution in a bipolar cell.

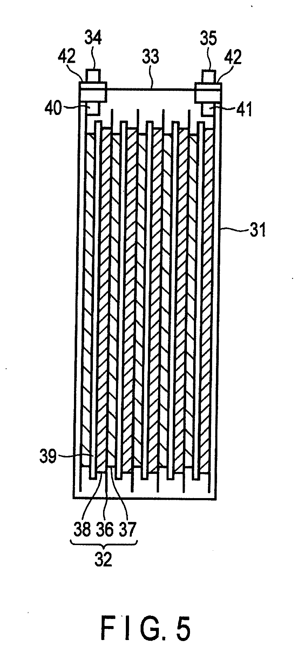

An example of the bipolar type secondary battery is shown in FIG. 5. The secondary battery shown in FIG. 5 includes a metal container 31, an electrode body 32 having a bipolar structure, a sealing plate 33, a positive electrode terminal 34, and a negative electrode terminal 35. The metal container 31 has a bottomed square cylindrical shape. The similar metal container as that described in the nonaqueous electrolyte secondary battery can be used. The electrode body 32 having the bipolar structure includes a current collector 36, a positive electrode layer (positive electrode active material-containing layer) 37 laminated on one surface (first surface) of the current collector 36, and a negative electrode layer (negative electrode active material-containing layer) 38 laminated on the other surface (second surface) of the current collector 36. A composite electrolyte layer 39 is disposed between the bipolar structure electrode bodies 32. Each of the positive electrode terminal 34 and the negative electrode terminal 35 is fixed to the sealing plate 33 with an insulating member 42 sandwiched therebetween. One end of a positive electrode lead 40 is electrically connected to the positive electrode terminal 34, and the other end of the positive electrode lead 40 is electrically connected to the current collector 36. One end of a negative electrode lead 41 is electrically connected to the negative electrode terminal 35, and the other end of the negative electrode lead 41 is electrically connected to the current collector 36.

A battery module and battery pack including the secondary battery of the second approach are also included in the range of the present application. The approach of the battery pack is appropriately changed according to the use.

Examples of the battery module include those including a plural single batteries which are electrically connected in series or parallel, and those including a unit including a plural single batteries which are electrically connected in series, or another unit including a plural single batteries which are electrically connected in parallel.

Examples of the form of serial or parallel electrical connection of a plural secondary batteries include serial or parallel electrical connection of a plural batteries each having a container member, and serial or parallel electrical connection of a plural electrode groups or bipolar type electrode bodies housed in a common case. According to a specific example of the former, positive and negative electrode terminals of a plural secondary batteries are connected by a metal bus bar (for example, aluminum, nickel, and copper). According to a specific example of the latter, a plural electrode groups or bipolar type electrode bodies are housed in one case electrochemically insulated by a partition wall, and these electrode groups or electrode bodies are electrically connected in series. When the number of the batteries electrically connected in series is set to 5 to 7 in the case of the nonaqueous electrolyte secondary battery, appropriate voltage compatibility with a lead storage battery is achieved. In order to further improve the voltage compatibility for the lead storage battery, five or six single batteries are preferably connected in series.

As a case which houses the battery module, a metal can made of an aluminum alloy, iron or stainless steel, a plastic container or the like can be used. The plate thickness of the container is desirably set to 0.5 mm or more.

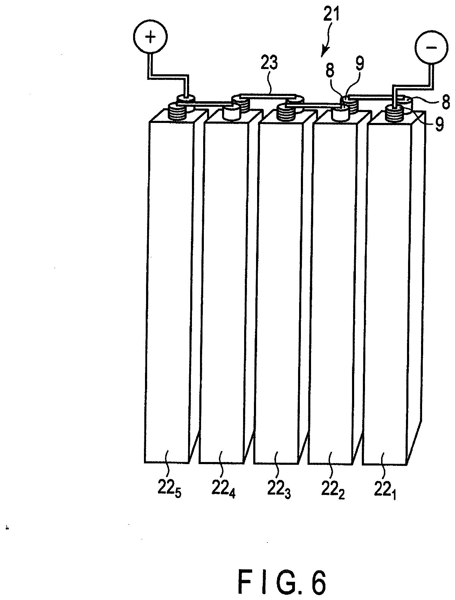

An example of the battery module will be described with reference to FIG. 6. A battery module 21 shown in FIG. 6 includes a plural square-shaped nonaqueous electrolyte batteries 22₁ to 22₅ shown in FIG. 1 as single batteries. The positive electrode conductive tab 8 of the battery 22₁ and the negative electrode conductive tab 9 of the battery 22₂ located next to the battery 22₁ are electrically connected by a lead 23. Furthermore, the positive electrode conductive tab 8 of the battery 22₂ and the negative electrode conductive tab 9 of the battery 22₃ located next to the battery 22₂ are electrically connected by the lead 23. Thus, the batteries 22₁ to 22₅ are connected in series.

Since the secondary battery of the approach described above includes the composite electrolyte of the first approach, the secondary battery having an excellent storage performance, charge-and-discharge cycle life, low-temperature performance, and large current performance can be achieved. An increase in the interface resistance is suppressed without deteriorating the joining of the positive electrode active material-containing layer and composite electrolyte, and the joining of the negative electrode active material-containing layer and composite electrolyte during a charge-and-discharge cycle, to markedly improve the cycle life performance. Thereby, the separator can be eliminated by using the composite electrolyte, and the resistance due to the separator is lost, whereby the discharge performance can be advantageously improved. The thermal stability and the electrochemical stability in a high-temperature environment are improved by using the organic solvent.

### (Third Approach)

A battery pack according to a third approach can include one or more secondary batteries according to the second approach. The plural nonaqueous electrolyte batteries can be electrically connected in series, in parallel, or in combination of series and parallel to constitute a battery module. The battery pack according to the third approach may include a plural battery modules.

The battery pack according to the third approach can further include a protective circuit. The protective circuit has a function for controlling the charge and discharge of a nonaqueous electrolyte battery. Alternatively, a circuit included in an apparatus using the battery pack as a power supply (for example, an electronic device and an automobile or the like) can also be used as the protective circuit of the battery pack.

The battery pack according to the third approach can further include an external power distribution terminal. The external power distribution terminal is intended to output a current from the nonaqueous electrolyte battery to the outside, and/or to input a current into the nonaqueous electrolyte battery. In other words, when the battery pack is used as a power supply, a current is supplied to the outside through the external power distribution terminal. When the battery pack is charged, a charging current (including the regenerative energy of the motive force of a vehicle such as an automobile) is supplied to the battery pack through the external power distribution terminal.

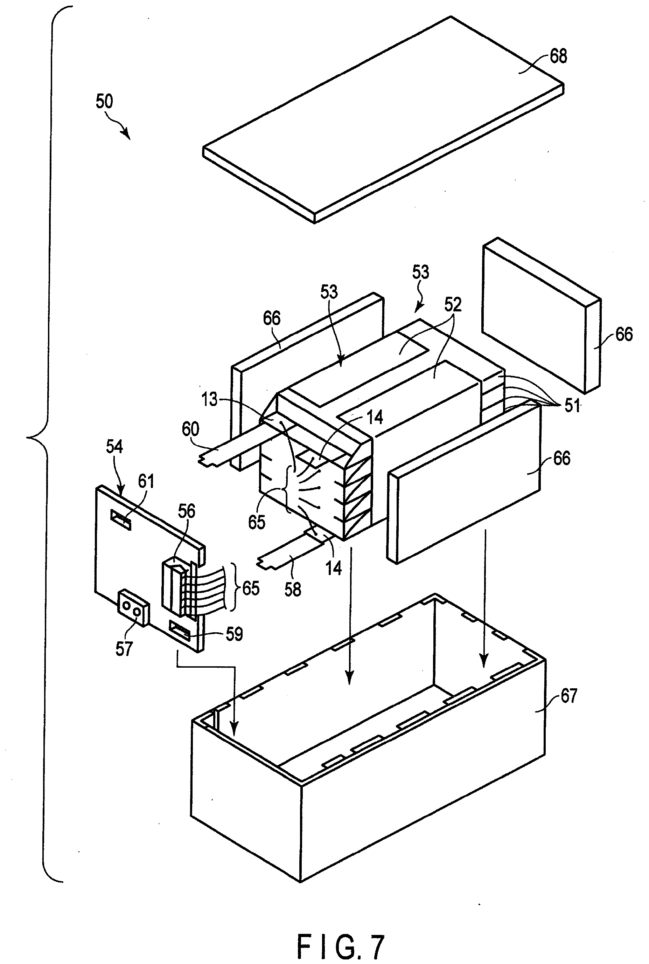

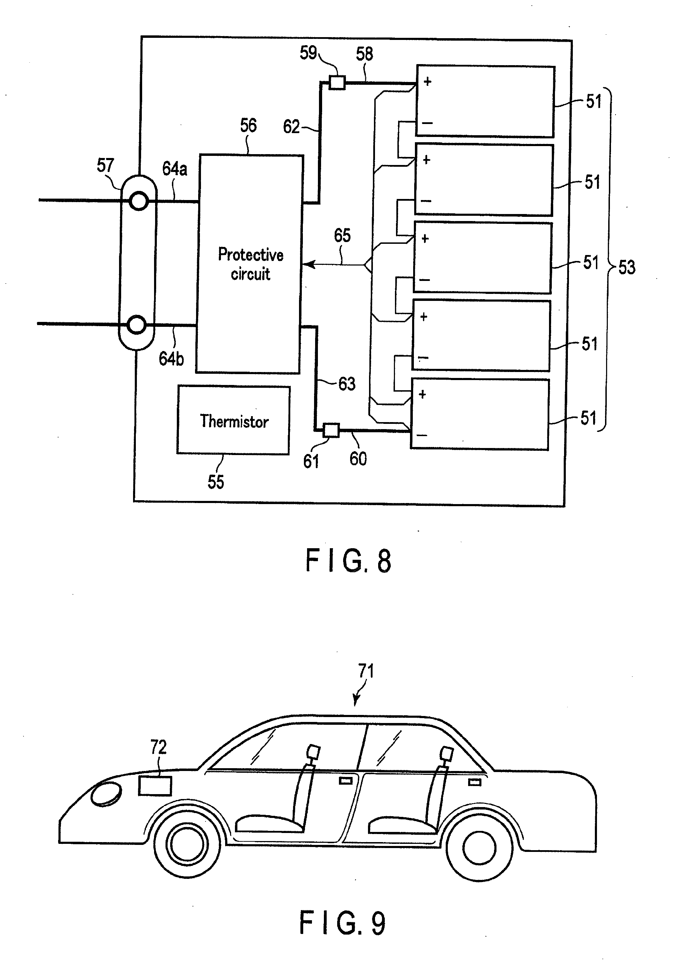

Next, an example of a battery pack according to the third approach will be described with reference to the drawings. FIGS. 7 and 8 show an example of a battery pack 50.

FIG. 7 is an exploded perspective view of an example of the battery pack 50. FIG. 8 is a block diagram showing an electric circuit of the battery pack 50.

The battery pack 50 shown in FIGS. 7 and 8 includes single batteries 51. The single batteries 51 are flat nonaqueous electrolyte batteries described with reference to FIG. 3.

Plural single batteries 51 are stacked so that the negative electrode terminals 13 and the positive electrode terminals 14 extended outside are arranged in the same direction, and fastened with an adhesive tape 52 to configure a battery module 53. The single batteries 51 are electrically connected to each other in series as shown in FIG. 8.

A printed wiring board 54 is arranged to face opposite to the side plane of the single battery 51 where the negative electrode terminal 13 and the positive electrode terminal 14 extend out from. A thermistor 55, a protective circuit 56, and an energizing terminal 57 to an external device as the external power distribution terminal are mounted on the printed wiring board 54 as shown in FIG. 8. An electric insulating plate (not shown) is attached to the surface of the printed wiring board 54 facing the battery module 53 to avoid unnecessary connection of the wires of the battery module 53.

A positive electrode-side lead 58 is connected to the positive electrode terminal 14 located at the bottom layer of the battery module 53 and the distal end of the lead 58 is inserted into a positive electrode-side connector 59 of the printed wiring board 54 so as to be electrically connected. A negative electrode-side lead 60 is connected to the negative electrode terminal 13 located at the top layer of the battery module 53 and the distal end of the lead 60 is inserted into an negative electrode-side connector 61 of the printed wiring board 54 so as to be electrically connected. The connectors 59 and 61 are connected to the protective circuit 56 through wires 62 and 63 formed on the printed wiring board 54.

The thermistor 55 detects the temperature of the single batteries 51, and the detection signal is sent to the protective circuit 56. The protective circuit 56 can shut down a plus-side wire 64a and a minus-side wire 64b between the protective circuit 56 and the energizing terminal 57 to an external device under a predetermined condition. The predetermined condition indicates, for example, the case where the temperature detected by the thermistor 55 becomes a predetermined temperature or more. Another example of the predetermined condition indicates the case where the over-charge, over-discharge, or overcurrent of the single batteries 51 is detected. The detection of the over-charge and the like is performed on each of the single batteries 51 or the entire battery module 53. When each of the single batteries 51 is detected, the battery voltage may be detected, or a positive electrode or negative electrode potential may be detected. In the latter case, a lithium electrode to be used as a reference electrode is inserted into each of the single batteries 51. In the case of the battery pack of FIGS. 7 and 8, wires 65 for voltage detection are connected to each of the single batteries 51. Detection signals are sent to the protective circuit 56 through the wires 65.

Protective sheets 66 made of rubber or resin are arranged on three side planes of the battery module 53 except the side plane from which the positive electrode terminal 14 and the negative electrode terminal 13 protrude out from.

The battery module 53 is housed in a housing container 67 together with each of the protective sheets 66 and the printed wiring board 54. That is, the protective sheets 66 are arranged on both internal surfaces in a long side direction and on one internal surface in a short side direction of the housing container 67. The printed wiring board 54 is arranged on the internal surface on the opposite side in a short side direction. The battery module 53 is located in a space surrounded by the protective sheets 66 and the printed wiring board 54. A lid 68 is attached to the upper surface of the housing container 67.

In order to fix the battery module 53, a heat-shrinkable tape may be used in place of the adhesive tape 52. In this case, the battery module is bound by placing the protective sheets on the both sides of the battery module, revolving the heat-shrinkable tape, and thermally shrinking the heat-shrinkable tape.

In FIGS. 7 and 8, the form in which the single batteries 51 are connected in series is shown. However, in order to increase the battery capacity, the batteries may be connected in parallel. Alternatively, the batteries may be formed by combining series connection and parallel connection. The assembled battery pack can be connected in series or in parallel.

In FIGS. 7 and 8, a battery pack including one battery module has been described; however, a battery pack according to the third approach may also include plural battery modules. The plural battery modules may be electrically connected in series and/or in parallel.

The aspect of the battery pack according to the approach may be appropriately changed depending on its application. The battery pack according to the approach can be suitably used in applications in which cycle performance is demanded to be excellent when a large current is taken out. Specifically the battery pack is used as a power source for a digital camera, a stationary battery, or for example, a battery for mounting on a vehicle such as a two- or four-wheeled hybrid electric automobiles, a two- or four-wheeled electric automobiles, a power-assisted bicycle or railway vehicles (railway cars). In particular, the battery pack is suitably used for a battery mounted on a vehicle.

In the vehicle on which the battery pack according to the third approach is mounted, the battery pack is configured to recover the regenerative energy of the motive force of the vehicle, for example.

An automobile as an example including a battery pack as an example according to a third approach is shown in FIG. 9.

FIG. 9 is a cross-sectional view schematically showing an example of a vehicle according to the third approach.

A vehicle 71, shown in FIG. 9 includes a vehicle body and a battery pack 72 according to the approach.

The battery pack 72 is installed in an engine compartment located at the front of the vehicle body. The location of installing the battery pack 72 is not particularly limited. The battery pack 72 may be installed in rear sections of the vehicle body, or under a seat. The battery pack 72 may be used as a power source of the vehicle 71. The battery pack 72 can also recover regenerative energy of motive force of the vehicle 71.

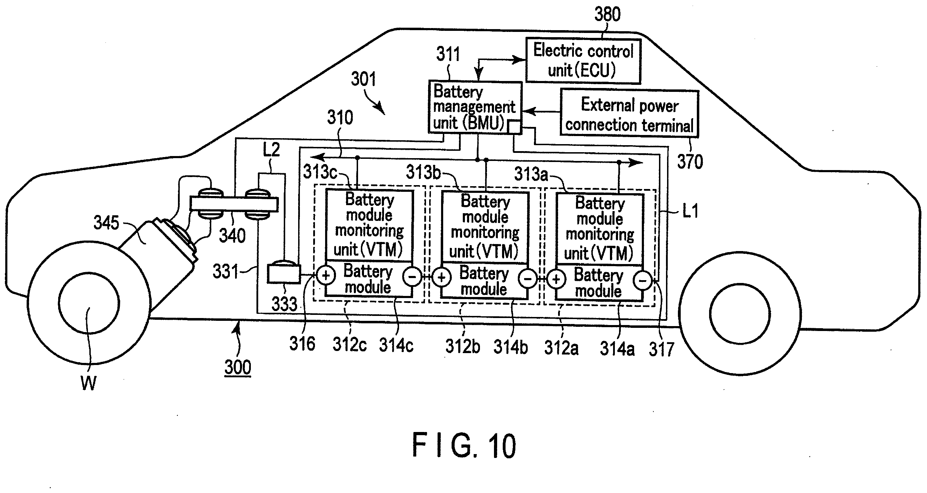

FIG. 10 is a view schematically showing an example of the vehicle according to the approach. A vehicle 300, shown in FIG. 10, is an electric automobile.

The vehicle 300, shown in FIG. 10, includes a vehicle body, a vehicle power source 301, a vehicle ECU (electric control unit) 380, which is a master controller of the vehicle power source 301, an external terminal (an external power connection terminal) 370, an inverter 340, and a drive motor 345.

The vehicle 300 includes the vehicle power source 301, for example, in the engine compartment, in the rear sections of the automobile body, or under a seat. In FIG. 10, the position of the vehicle power source 301 installed in the vehicle 300 is schematically shown.

The vehicle power source 301 includes plural (for example, three) battery packs 312a, 312b and 312c, BMU (a battery management unit) 311, and a communication bus 310.

The three battery packs 312a, 312b and 312c are electrically connected to each other in series. The battery pack 312a includes a battery module 314a and a battery module monitoring unit (VTM: voltage temperature monitoring) 313a. The battery pack 312b includes a battery module 314b, and a battery module monitoring unit 313b. The battery pack 312c includes a battery module 314c, and a battery module monitoring unit 313c. The battery packs 312a, 312b and 312c can each be independently removed, and may be exchanged by a different battery pack.

Each of the battery modules 314a to 314c includes plural single batteries connected to each other in series. At least one of the plural single batteries is the secondary battery according to the approach. The battery modules 314a to 314c each perform charging and discharging through a positive electrode terminal 316 and a negative electrode terminal 317.

In order to collect information concerning security of the vehicle power source 301, the battery management unit 311 performs communication with the battery module monitoring units 313a to 313c and collects information such as voltages or temperatures of the single batteries included in the battery modules 314a to 314c included in the vehicle power source 301.

The communication bus 310 is connected between the battery management unit 311 and the battery module monitoring units 313a to 313c. The communication bus 310 is configured so that multiple nodes (i.e., the battery management unit and one or more battery module monitoring units) share a set of communication lines. The communication bus 310 is, for example, a communication bus configured based on CAN (Control Area Network) standard.

The battery module monitoring units 313a to 313c measure a voltage and a temperature of each single battery in the battery modules 314a to 314c based on communications from the battery management unit 311. It is possible, however, to measure the temperatures only at several points per battery module, and the temperatures of all of the single batteries need not be measured.

The vehicle power source 301 may also have an electromagnetic contactor (for example, a switch unit 333 shown in FIG. 10) for switching connection between the positive electrode terminal and the negative electrode terminal. The switch unit 333 includes a precharge switch (not shown), which is turned on when the battery modules 314a to 314c are charged, and a main switch (not shown), which is turned on when battery output is supplied to a load. The precharge switch and the main switch include a relay circuit (not shown), which is turned on or off based on a signal supplied to a coil located near the switch element.

The inverter 340 converts an inputted DC (direct current) voltage to a three-phase AC (alternate current) high voltage for driving a motor. Three-phase output terminal(s) of the inverter 340 is connected to each three-phase input terminal of the drive motor 345. The inverter 340 controls an output voltage based on control signals from the battery management unit 311 or the vehicle ECU 380, which controls the whole operation of the vehicle.

The drive motor 345 is rotated by electric power supplied from the inverter 340. The rotation is transferred to an axle and driving wheels W, for example, through a differential gear unit.

The vehicle 300 also includes a regenerative brake mechanism, though not shown. The regenerative brake mechanism rotates the drive motor 345 when the vehicle 300 is braked, and converts kinetic energy into regenerative energy, as electric energy. The regenerative energy, recovered in the regenerative brake mechanism, is inputted into the inverter 340 and converted to direct current. The direct current is inputted into the vehicle power source 301.

One terminal of a connecting line L1 is connected through a current detector (not shown) in the battery management unit 311 to the negative electrode terminal 317 of the vehicle power source 301. The other terminal of the connecting line L1 is connected to a negative electrode input terminal of the inverter 340.

One terminal of a connecting line L2 is connected through the switch unit 333 to the positive electrode terminal 316 of the vehicle power source 301. The other terminal of the connecting line L2 is connected to a positive electrode input terminal of the inverter 340.

The external terminal 370 is connected to the battery management unit 311. The external terminal 370 is able to connect, for example, to an external power source.

The vehicle ECU 380 cooperatively controls the battery management unit 311 together with other units in response to inputs operated by a driver or the like, thereby performing the management of the whole vehicle. Data concerning the security of the vehicle power source 301, such as a remaining capacity of the vehicle power source 301, are transferred between the battery management unit 311 and the vehicle ECU 380 through communication lines.

In a vehicle including the secondary battery according to the approach, each of the battery packs 312a, 312b, and 312c is excellent in storage performance, low-temperature performance, large current performance, and cycle life performance, and therefore, a vehicle having excellent charge/discharge performance and high reliability can be obtained. Further, since each of the battery packs has a reasonable cost and is highly safe, it is possible to reduce the cost of the vehicle and improve the safety.

Since the battery pack of the third approach includes the secondary battery of the second approach, a battery pack excellent in storage performance, low-temperature performance, large current performance, and cycle life performance can be achieved.

In the vehicle including the secondary battery according to the approach, each of the battery packs 312a, 312b, and 312c has excellent storage performance, low-temperature performance, large current performance, and cycle life performance, so that the vehicle having excellent charge-and-discharge performance and high reliability can be obtained. Furthermore, each of the battery packs is inexpensive and has high safety, which makes it possible to suppress the cost of the vehicle and improve the safety.

Since the battery pack of the third approach includes the secondary battery of the second approach, the battery pack having excellent storage performance, low-temperature performance, large current performance, and cycle life performance can be achieved.

### [Examples]

Examples of the approaches will be hereinafter described in detail with reference to the drawings. However, the approaches are not limited thereto.

### (Example 1)

LiNi_{0.8}Co_{0.1}Mn_{0.1}O₂ particles having an average particle size of 5 µm were used as a positive electrode active material. 5% by weight of a graphite powder as an electroconductive agent and 5% by weight of PVdF as a binder based on the entire positive electrode were blended with the positive electrode active material, and dispersed in an n-methylpyrrolidone (NMP) solvent to prepare a slurry. The obtained slurry was applied to both surfaces of an aluminum alloy foil (purity: 99%) having a thickness of 15 µm, followed by drying and pressing to produce a positive electrode having an electrode density of 3 g/cm³.

Li₄Ti₅O₁₂ particles having an average primary particle size of 0.6 µm and a specific surface area of 10 m²/g were used as a negative electrode active material. The negative electrode active material, a graphite powder having an average particle size of 6 µm as an electroconductive agent, and PVdF as a binder were blended at a weight ratio of 95 : 3 : 2 and dispersed in an n-methylpyrrolidone (NMP) solvent. The obtained dispersion was stirred at 1000 rpm for 2 hours by using a ball mill to prepare a slurry. The obtained slurry was applied to an aluminum alloy foil (purity: 99.3%) having a thickness of 15 µm, followed by drying and heat pressing to produce a negative electrode including a current collector having each surface on which a negative electrode active material-containing layer having an electrode density of 2.2 g/cm³ was formed. The porosity of the negative electrode excluding the current collector was 35%.

Li_{1.3}Al_{0.3}Zr_{1.7}(PO₄)₃ particles having a specific surface area of 50 m²/g measured by the BET method based on N₂ adsorption and having an average primary particle size (diameter) of 0.1 µm were prepared as lithium-containing inorganic particles. A nonaqueous electrolytic solution (organic electrolytic solution) was prepared by dissolving 1 M of LiPF₆ in a mixed solvent in which propylene carbonate (PC) and diethyl carbonate (DEC) were mixed at a volume ratio of 1 : 2.

An aqueous solution in which cellulose nanofibers having an average diameter of 10 nm and Li_{1.3}Al_{0.3}Zr_{1.7}(PO₄)₃ particles were dispersed was applied to the surfaces of the positive electrode active material-containing layer of the positive electrode and the negative electrode active material-containing layer of the negative electrode, and dried. Next, these were impregnated with a nonaqueous electrolytic solution and a polymer solution (concentration: 2% by weight) in which polyacrylonitrile (PAN) was dispersed in an organic solvent, and subjected to a heat treatment at 60°C for 24 hours to form a gel composite electrolyte layer having a thickness of 5 µm. In the composite electrolyte layer, the weight ratio of the Li_{1.3}Al_{0.3}Zr_{1.7}(PO₄)₃ particles, gel polymer body containing a nonaqueous electrolytic solution and a polyacrylonitrile (PAN) polymer solution, and cellulose nanofibers was 94 : 4 : 2.

The negative electrode and the positive electrode were stacked so that the negative electrode faced the positive electrode to produce an electrode group. The electrode group was housed in a thin metal can made of an aluminum alloy (Al purity: 99% by weight) having a thickness of 0.25 mm.

A square-shaped nonaqueous electrolyte secondary battery having the structure shown in FIG. 1 and having a thickness of 13 mm, a width of 62 mm, and a height of 96 mm was produced.

### (Examples 2 to 20 and Comparative Examples 1 to 6)

A secondary battery was produced in the same manner as that described in Example 1 except that a positive electrode active material, a negative electrode active material, the compositions, specific surface areas, and contents of lithium-containing inorganic particles, the average diameter and content of polymer fibers, and the composition of an organic electrolytic solution were as shown in the following Tables 1 to 4. As the positive electrode active material of Example 16, a positive electrode active material was used, which contained LiMn_{0.9}Fe_{0.1}PO₄ secondary particles (primary particles having an average particle size of 50 nm) having an olivine structure and carbon material particles having an average particle size of 5 nm and adhering in an adhesion amount of 0.1% by weight to the surfaces of the secondary particles.

### [Table 1]

**Table 1**

| | Positive electrode active material | Negative electrode active material | Lithium-containing inorganic particles | | | Content of lithium-containing inorganic particles in composite electrolyte (% by weight) |
|---|---|---|---|---|---|---|
| | | | Composition | Specific surface area (m²/g) | Average primary particle size (µm) | |
| Example 1 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 94 |
| Example 2 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 94 |
| Example 3 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 94 |
| Example 4 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 94 |
| Example 5 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 94 |
| Example 6 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 95 |
| Example 7 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 91 |
| Example 8 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 86 |
| Example 9 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 94.5 |
| Example 10 | LiNi_{0.8}Co_{0.1}Mn_{0.1}O₂ | Li₄Ti₅O₁₂ | Li_{1.3}Al_{0.3}Ti_{1.7} (PO₄)₃ | 50 | 0.1 | 95.9 |
| Example 11 | LiNi_{0.8}Co_{0.1}Mn_{0.01}O₂ | Li₄Ti₅O₁₂ | Li_{1.3}Al_{0.3}Ge_{1.7} (PO₄)₃ | 50 | 0.1 | 94 |
| Example 12 | LiNi_{0.8}Co_{0.1}Mn_{0.1}O₂ | Li₄Ti₅O₁₂ | Li₇La₃Zr₂O₁₂ | 50 | 0.1 | 94 |
| Example 13 | LiNi_{0.8}Co_{0.1}Mn_{0.1}O₂ | Li₄Ti₅O₁₂ | LiAlO₂ | 50 | 0.1 | 94 |
| Example 14 | LiNi_{0.8}Co_{0.1}Mn_{0.1}O₂ | TiNb₂O₇ | Li_{1.3}Al_{0.3}Zr_{1.7} (PO₄) ₃ | 50 | 0.1 | 94 |
| Example 15 | LiNi_{0.8}Co_{0.1}Mn_{0.1}O₂ | Orthorhombic type Li₂Na_{1.5}Ti_{5.5}Nb_{0.5}O₁₄ | Li_{1.3}Al_{0.3}Zr_{1.7} (PO₄)₃ | 50 | 0.1 | 94 |
| Example 16 | Olivine type LiMn_{0.9}Fe_{0.1}PO₄ | TiNb₂O₇ | Li_{1.3}Al_{0.3}Zr_{1.7} (PO₄)₃ | 50 | 0.1 | 94 |
| Example 17 | LiNi_{0.8}Co_{0.1}Mn_{0.1}O₂ | Li₄Ti₅O₁₂ | Li_{1.3}Al_{0.3}Ge_{1.7} (PO₄) ₃ | 10 | 1 | 94 |
| Example 18 | LiNi_{0.8}Co_{0.1}Mn_{0.1}O₂ | Li₄Ti₅O₁₂ | Li_{1.3}Al_{0.3}Ge_{1.7} (PO₄)₃ | 100 | 0.05 | 92 |
| Example 19 | LiNi_{0.8}Co_{0.1}Mn_{0.1}O₂ | Li₄Ti₅O₁₂ | Li_{1.3}Al_{0.3}Ge_{1.7} (PO₄)₃ | 50 | 0.1 | 85 |
| Example 20 | LiNi_{0.8}Co_{0.1}Mn_{0.1}O₂ | Li₄Ti₅O₁₂ | Li_{1.3}Al_{0.3}Ge_{1.7} (PO₄) ₃ | 50 | 0.1 | 98 |

### [Table 2]

**Table 2**

| | Positive electrode active material | Negative electrode active material | Lithium-containing inorganic particles | | | Content of lithium-containing inorganic particles in composite electrolyte (% by weight) |
|---|---|---|---|---|---|---|
| | | | Composition | Specific surface area (m²/g) | Average primary particle size (µm) | |
| Comparative Example 1 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 96 |
| Comparative Example 2 | LiNi_{0.8}Co_{0.1}Mn_{0.1}O₂ | Li₄Ti₅O₁₂ | Li_{1.3}Al_{0,3}Zr_{1.7} (PO₄)₃ | 50 | 0.1 | 84 |
| Comparative Example 3 | LiNi_{0.8}Co_{0.1}Mn_{0.1}O₂ | Li₄Ti₅O₁₂ | SiO₂ | 10 | 1 | 94 |
| Comparative Example 4 | LiNi_{0.8}Co_{0.1}Mn_{0.1}O₂ | Li₄Ti₅O₁₂ | Al₂O₃ | 100 | 0.05 | 94 |
| Comparative Example 5 | LiNi_{0.8}Co_{0.1}Mn_{0.1}O₂ | Li₄Ti₅O₁₂ | Li_{1.3}Al_{0.3}Zr_{1.7} (PO₄) ₃ | 50 | 0.1 | 94 |
| Comparative Example 6 | LiNi_{0.8}Co_{0.1}Mn_{0.1}O₂ | Li₄Ti₅O₁₂ | Li_{1.3}Al_{0.3}Zr_{1.7} (PO₄)₃ | 50 | 0.1 | 94 |

### [Table 3]

**Table 3**

| | Average diameter of polymer fibers (nm) | Content of polymer fibers in composite electrolyte (% by weight) | Content of polymer in composite electrolyte (% by weight) | Kind and volume ratio of organic solvent of organic electrolytic solution composition | Kind and concentration of electrolyte of organic electrolytic solution composition |
|---|---|---|---|---|---|
| Example 1 | 10 | 2 | 1 | PC:DEC=1:2 | LiPF₆ 1M |
| Example 2 | 50 | 2 | 1 | PC:DEC=1:2 | LiPF₆ 1M |
| Example 3 | 100 | 2 | 1 | PC:DEC=1:2 | LiPF₆ 1M |
| Example 4 | 5 | 2 | 1 | PC:DEC=1:2 | LiPF₆ 1M |
| Example 5 | 1 | 2 | 1 | PC:DEC=1:2 | LiPF₆ 1M |
| Example 6 | 10 | 1 | 1 | PC:DEC=1:2 | LiPF₆ 1M |
| Example 7 | 10 | 5 | 1 | PC:DEC=1:2 | LiPF₆ 1M |
| Example 8 | 10 | 10 | 2 | PC:DEC=1:2 | LiPF₆ 1M |
| Example 9 | 10 | 0.5 | 1 | PC:DEC=1:2 | LiPF₆ 1M |
| Example 10 | 10 | 0.1 | 1 | PC:DEC=1:2 | LiPF₆ 1M |
| Example 11 | 10 | 2 | 1 | PC:DEC=1:2 | LiPF₆ 1M |
| Example 12 | 10 | 2 | 1 | PC:DEC=1:2 | LiPF₆ 1M |
| Example 13 | 10 | 2 | 1 | PC:DEC=1:2 | LiPF₆ 1M |
| Example 14 | 10 | 2 | 1 | PC:DEC=1:2 | LiPF₆ 1M |
| Example 15 | 10 | 2 | 1 | PC:DEC=1:2 | LiPF₆ 1M |
| Example 16 | 10 | 2 | 1 | PC:DEC=1:2 | LiPF₆ 1M |
| Example 17 | 10 | 2 | 1 | PC:DEC=1:2 | LiPF₆ 1M |
| Example 18 | 10 | 2 | 1 | PC:DEC=1:2 | LiPF₆ 1M |
| Example 19 | 10 | 2 | 1 | PC:DEC=1:2 | LiPF₆ 1M |
| Example 20 | 10 | 2 | 1 | PC:DEC=1:2 | LiPF₆ 1M |

### [Table 4]

**Table 4**

| | Average diameter of polymer fibers (nm) | Content of polymer fibers in composite electrolyte (% by weight) | Content of polymer in composite electrolyte (% by weight) | Kind and volume ratio of organic solvent of organic electrolytic solution composition | Kind and concentration of electrolyte of organic electrolytic solution composition |
|---|---|---|---|---|---|
| Comparative Example 1 | - | 0 | 1 | PC:DEC=1:2 | LiPF₆ 1M |
| Comparative Example 2 | 150 | 12 | 2 | PC:DEC=1:2 | LiPF₆ 1M |
| Comparative Example 3 | - | 0 | 1 | PC:DEC=1:2 | LiPF₆ 1M |
| Comparative Example 4 | - | 0 | 1 | PC:DEC=1:2 | LiPF₆ 1M |
| Comparative Example 5 | 800 | 10 | 1 | PC:DEC=1:2 | LiPF₆ 1M |
| Comparative Example 6 | 10 | 0.05 | 1 | PC:DEC=1:2 | LiPF₆ 1M |

The obtained secondary battery was charged to 2.9 V at a constant current of 6 A at 25°C, then charged at a constant voltage of 2.9 V. The charge was terminated when the current value reached 0.05 A. Next, a discharge capacity when the secondary battery was discharged at 6 A to 1.5 V was measured, and taken as a discharge capacity at 25°C.

As high current discharge performance, the secondary battery was charged to 2.9 V at a constant current of 6 A at 25°C, and then charged at a constant voltage of 2.9 V. The charge was terminated when the current value reached 0.05 A. Next, a capacity retention ratio when the secondary battery was discharged at 5 C (30 A) was measured. The capacity retention ratio was calculated with a capacity when the secondary battery was discharged at 0.2 C (1.2 A) as 100%.

As low-temperature discharge performance, the secondary battery was charged to 2.9 V at a constant current of 6 A at 25°C, and then charged at constant voltage of 2.9 V. The charge was terminated when the current value reached 0.05 A. Next, a capacity retention ratio when the secondary battery was discharged at 1.2 A at -20°C was measured. The capacity retention ratio was calculated with a discharge capacity at 25°C as 100%.

As storage performance (self-discharge performance), a residual capacity after 1 month at 60°C was measured. The secondary battery was charged by 100% to 2.9 V, then left in a 60°C environment for 1 month, and the discharged to 1.5 V at 1.2 A to measure a discharge capacity. The obtained discharge capacity is expressed with a discharge capacity before storage at 60°C as 100%, and is taken as a residual capacity after 1 month at 60°C.

These measurment results are shown in the following Tables 5 and 6.

### [Table 5]

**Table 5**

| | Discharge capacity at 25°C (Ah) | Residual capacity after 1 month at 60°C (%) | 5 C discharge retention rate (%) | Discharge retention rate at -20°C (%) |
|---|---|---|---|---|
| Example 1 | 6.0 | 90 | 80 | 80 |
| Example 2 | 6.0 | 80 | 80 | 80 |
| Example 3 | 6.0 | 70 | 75 | 75 |
| Example 4 | 6.0 | 90 | 83 | 83 |
| Example 5 | 6.0 | 85 | 80 | 80 |
| Example 6 | 6.0 | 92 | 78 | 75 |
| Example 7 | 5.8 | 78 | 70 | 70 |
| Example 8 | 6.0 | 70 | 80 | 80 |
| Example 9 | 6.0 | 68 | 80 | 80 |
| Example 10 | 5.9 | 85 | 80 | 80 |
| Example 11 | 6.0 | 90 | 82 | 82 |
| Example 12 | 6.0 | 88 | 82 | 83 |
| Example 13 | 5.5 | 88 | 65 | 60 |
| Example 14 | 6.6 | 75 | 70 | 70 |
| Example 15 | 5.5 | 75 | 70 | 70 |
| Example 16 | 5.5 | 90 | 70 | 70 |
| Example 17 | 5.9 | 80 | 70 | 75 |
| Example 18 | 5.9 | 80 | 70 | 75 |
| Example 19 | 6.0 | 75 | 80 | 80 |
| Example 20 | 6.0 | 92 | 70 | 70 |

### [Table 6]

**Table 6**

| | Discharge capacity at 25°C (Ah) | Residual capacity after 1 month at 60°C (%) | 5 C discharge retention rate (%) | Discharge retention rate at -20°C (%) |
|---|---|---|---|---|
| Comparative Example 1 | 5.9 | 60 | 60 | 60 |
| Comparative Example 2 | 5.8 | 40 | 10 | 10 |
| Comparative Example 3 | 5.5 | 20 | 40 | 20 |
| Comparative Example 4 | 5.2 | 20 | 30 | 20 |
| Comparative Example 5 | 5.8 | 50 | 20 | 20 |
| Comparative Example 6 | 5.9 | 60 | 40 | 40 |

As is apparent from Tables 1 to 6, each of the composite electrolytes of Examples 1 to 20 can achieve a secondary battery having a higher residual capacity after 1 month at 60°C, a higher 5 C discharge capacity retention ratio, and a more excellent discharge capacity, high-temperature storage performance at 60°C (storage performance), large current discharge performance, and low-temperature discharge performance than those of the composite electrolytes of Comparative Examples 1 to 6.

In comparison of Examples 1 to 5, it is found that a secondary battery can be achieved, which has an excellent discharge capacity, high-temperature storage performance at 60°C, large current discharge performance, and low-temperature discharge performance, by setting the average diameter of the polymer fibers to 1 to 100 nm.

In comparison of Examples 1, and 6 to 10, it is found that a secondary battery can be achieved, which has an excellent discharge capacity, high-temperature storage performance at 60°C, large current discharge performance, and low-temperature discharge performance, by setting the content of the polymer fibers to 0.1% by weight to 10% by weight.

From the results of Examples 14 to 16, it is found that a secondary battery can be achieved, which has an excellent discharge capacity, high-temperature storage performance at 60°C (storage performance), large current discharge performance, and low-temperature discharge performance even when the kind of the positive or negative electrode active material is made different from that of Example 1.

In comparison of Examples 1, 19, and 20, it is found that the secondary battery of Example 1 in which the content of the lithium-containing inorganic particles of the composite electrolyte is 90% by weight to 95% by weight has an excellent discharge capacity, high-temperature storage performance at 60°C (storage performance), large current discharge performance, and low-temperature discharge performance.

### (Example A)

A positive electrode slurry prepared in the same manner as in Example 1 was applied onto a first surface of a current collector containing an aluminum alloy foil having a thickness of 15 µm (purity: 99% by weight), followed by drying to form a positive electrode active material-containing layer. A negative electrode slurry prepared in the same manner as in Example 1 was applied onto a second surface of the current collector, followed by drying to form a negative electrode active material-containing layer. Thereby, an electrode body having a bipolar structure was obtained.

A gel composite electrolyte layer having a thickness of 5 µm was formed on the surfaces of the positive electrode active material-containing layer and negative electrode active material-containing layer of the electrode body having a bipolar structure in the same manner as in Example 1. Five electrode bodies each having a bipolar structure were produced in such procedures. The five electrode bodies each having a bipolar structure were connected in series so that the composite electrolyte layer was disposed between the positive electrode active material-containing layer and the negative electrode active material-containing layer, to produce a bipolar type secondary battery having a structure shown in FIG. 5 and having a capacity of 1 Ah.

### (Comparative Example B)

A bipolar type secondary battery having a structure shown in FIG. 5 and having a capacity of 1 Ah was produced in the same manner as in Example A except that the same composite electrolyte layer as that of Comparative Example 1 was used.

The obtained bipolar type secondary battery was charged to 14.5 V at a constant current of 6 A at 25°C, and then charged at a constant voltage of 14.5 V. The charge was terminated when the current value reached 0.05 A. Next, a discharge capacity when the secondary battery was discharged at 6 A to 8 V was measured, and taken as a discharge capacity at 25°C.

As high current discharge performance, the secondary battery was charged to 14.5 V at a constant current of 6 A at 25°C, and then charged at a constant voltage of 14.5 V. The charge was terminated when the current value reached 0.05 A. Next, a capacity retention ratio when the secondary battery was discharged at 5 C (30 A) was measured. The capacity retention ratio was calculated with a capacity when the secondary battery was discharged at 0.2 C (1.2 A) as 100%.

As low-temperature discharge performance, the secondary battery was charged to 14.5 V at a constant current of 6 A at 25°C, and then charged at a constant voltage of 14.5 V. The charge was terminated when the current value reached 0.05 A. Next, a capacity retention ratio when the secondary battery was discharged at 1.2 A at -20°C was measured. The capacity retention ratio was calculated with a discharge capacity at 25°C as 100%.

As storage performance (self-discharge performance), a residual capacity after 1 month at 60°C was measured. The secondary battery was charged by 100% to 14.5 V, then left in a 60°C environment for 1 month, and then discharged to 8 V at 1.2 A to measure a discharge capacity. The obtained discharge capacity is expressed with a discharge capacity before storage at 60°C as 100%, and is taken as a residual capacity after 1 month at 60°C. These measurement results are shown in the following Table 7.

### [Table 7]

**Table 7 (Bipolar battery)**

| | Discharge capacity at 25°C (Ah) | Residual capacity after 1 month at 60°C (%) | 5 C discharge retention rate (%) | Discharge retention rate at -20°C (%) |
|---|---|---|---|---|
| Example A | 1 | 88 | 78 | 78 |
| Comparative Example B | 0.9 | 50 | 50 | 50 |

As is apparent from Table 7, the bipolar battery of Example A has a more excellent discharge capacity at 25°C, residual capacity at 60°C for 1 month, capacity retention ratio during 5C discharge, and capacity retention ratio at -20°C than those of the bipolar battery of Comparative Example B.

At least one approach or Example provides a composite electrolyte containing 0.1% by weight to 10% by weight of polymer fibers having an average diameter of 1 nm to 100 nm, lithium-containing inorganic particles, and an organic electrolytic solution containing lithium ions. The composite electrolyte of the approach can improve lithium ion conductivity and strength.

## Claims

1. A composite electrolyte (5) comprising:
- 0.1-10 wt.-% of polymer fibers having an average diameter of 1-100 nm, measured by observing the polymer fiber with a scanning electron microscope (SEM) at a magnification of 10,000 times, measuring widths at positions of 25%, 50%, and 75% of the total length of all the polymer fibers existing in the field of view, and taking the average of the measured width values as the average diameter;
- lithium-containing inorganic particles; and
- an organic electrolytic solution containing lithium ions.

2. A secondary battery comprising:
- a positive electrode active material-containing layer (3b) ;
- a negative electrode active material-containing layer (4b); and
- provided on a surface of at least one of the layers (3b) and (4b), a composite electrolyte (5) as defined in claim 1.

3. The secondary battery of claim 2, wherein
the specific surface area of the lithium-containing inorganic particles, according to a BET adsorption method using N₂, is 10-500 m²/g; and
the content of the lithium-containing inorganic particles of the composite electrolyte (5) is 85-98 wt.-%.

4. The secondary battery of claim 2 or 3, wherein the lithium-containing inorganic particles contain lithium ion conductive inorganic solid electrolyte particles.

5. The secondary battery of any of claims 2-4, wherein the polymer fibers contain cellulose.

6. The secondary battery of any of claims 2-5, wherein the negative electrode active material-containing layer (4b) contains a titanium-containing oxide.

7. The secondary battery of claim 6, wherein the titanium-containing oxide contains at least one of a lithium titanium oxide having a spinel structure, a monoclinic titanium oxide, and a niobium titanium oxide.

8. The secondary battery of any of claims 2-7, which further comprises a current collector (36) having a first surface and a second surface located opposite to the first surface, and has a bipolar structure in which the positive electrode active material-containing layer (37) is provided on the first surface of the current collector (36), and the negative electrode active material-containing layer (38) is provided on the second surface.

9. A battery pack (50) comprising one or more of secondary batteries (51), each of any of claims 2-8.

10. The battery pack (50) of claim 9, further comprising an external power distribution terminal (57), and a protective circuit (56).

11. The battery pack (50) of claim 9 or 10 comprising two or more of the secondary batteries (51), wherein the two or more secondary batteries (51) are electrically connected in series, in parallel, or in combination of series and parallel.

12. A vehicle (71) comprising the battery pack (72) of any of claims 9-11.

13. The vehicle (71) of claim 12, which comprises a mechanism configured to convert kinetic energy of the vehicle into regenerative energy.

## Patentansprüche

1. Verbundelektrolyt (5), umfassend:
- 0,1-10 Gew.-% Polymerfasern mit einem durchschnittlichen Durchmesser von 1-100 nm, gemessen durch Beobachten der Polymerfaser mit einem Rasterelektronenmikroskop (REM) bei einer 10.000-fachen Vergrößerung, Messen der Breiten an Positionen von 25%, 50% und 75% der Gesamtlänge aller im Sichtfeld vorhandenen Polymerfasern und Nehmen des Durchschnitts der gemessenen Breitenwerte als den durchschnittlichen Durchmesser;
- lithiumhaltige anorganische Teilchen; und
- eine organische Elektrolytlösung, die Lithiumionen enthält.

2. Sekundärbatterie, umfassend:
- eine Schicht, die Aktivmaterial für eine positive Elektrode enthält (3b);
- eine Schicht, die Aktivmaterial für eine negative Elektrode enthält (4b); und
- einen Verbundelektrolyten wie in Anspruch 1 definiert, der auf einer Oberfläche mindestens einer der Schichten (3b) und (4b) bereitgestellt ist.

3. Sekundärbatterie gemäß Anspruch 2, worin
die spezifische Oberfläche der lithiumhaltigen anorganischen Teilchen nach einem BET-Adsorptionsverfahren unter Verwendung von N₂ 10-500 m²/g beträgt; und
der Gehalt der lithiumhaltigen anorganischen Teilchen des Verbundelektrolyten (5) 85-98 Gew.-% beträgt.

4. Sekundärbatterie gemäß Anspruch 2 oder 3, worin die lithiumhaltigen anorganischen Teilchen lithiumionenleitende anorganische Festelektrolytteilchen enthalten.

5. Sekundärbatterie gemäß mindestens einem der Ansprüche 2-4, worin die Polymerfasern Cellulose enthalten.

6. Sekundärbatterie gemäß mindestens einem der Ansprüche 2-5, worin die Schicht (4b), die Aktivmaterial für eine negative Elektrode enthält, ein titanhaltiges Oxid enthält.

7. Sekundärbatterie gemäß Anspruch 6, worin das titanhaltige Oxid mindestens eines aus einem Lithium-Titanoxid mit einer Spinell-Struktur, einem monoklinischen Titanoxid und einem Niob-Titanoxid enthält.

8. Sekundärbatterie gemäß mindestens einem der Ansprüche 2-7, ferner umfassend einen Stromabnehmer (36), der eine erste Oberfläche und eine der ersten Oberfläche gegenüberliegende zweite Oberfläche aufweist und eine bipolare Struktur hat, in der die Schicht (37), die das Aktivmaterial für eine positive Elektrode enthält, auf der ersten Oberfläche des Stromabnehmers (36) bereitgestellt ist und die Schicht (38), die das Aktivmaterial für eine negative Elektrode enthält, auf der zweiten Oberfläche bereitgestellt ist.

9. Batteriepack (50), umfassend eine oder mehrere der Sekundärbatterien (51), jeweils gemäß mindestens einem der Ansprüche 2-8.

10. Batteriepack (50) gemäß Anspruch 9, ferner umfassend einen externen Stromverteilungsanschluss (57) und eine Schutzschaltung (56).

11. Batteriepack (50) gemäß Anspruch 9 oder 10, umfassend zwei oder mehrere der Sekundärbatterien (51), worin die zwei oder mehreren Sekundärbatterien (51) elektrisch in Reihe, parallel oder einer Kombination von Reihe und parallel geschalten sind.

12. Fahrzeug (71), umfassend den Batteriepack (72) gemäß mindestens einem der Ansprüche 9-11.

13. Fahrzeug (71) gemäß Anspruch 12, das einen Mechanismus umfasst, der so konfiguriert ist, dass kinetische Energie des Fahrzeugs in regenerative Energie umgewandelt wird.

## Revendications

1. Electrolyte composite (5) comprenant :
- de 0,1 à 10 % en poids de fibres polymères ayant un diamètre moyen de 1 à 100 nm, mesuré en observant la fibre polymère avec un microscope électronique à balayage (SEM) à un grossissement de 10 000 fois, en mesurant des largeurs dans des positions de 25 %, 50 % et 75 % de la longueur totale de toutes les fibres polymères existant dans le champ de vision, et en prenant la moyenne des valeurs de largeur mesurées comme diamètre moyen ;
- des particules inorganiques contenant du lithium ; et
- une solution électrolytique organique contenant des ions lithium.

2. Batterie secondaire comprenant :
- une couche contenant du matériau actif d'électrode positive (3b) ;
- une couche contenant du matériau actif d'électrode négative (4b) ; et
- prévu sur une surface d'au moins l'une des couches (3b) et (4b), un électrolyte composite (5) tel que défini dans la revendication 1.

3. Batterie secondaire selon la revendication 2, dans laquelle :
la surface spécifique des particules inorganiques contenant du lithium, selon un procédé d'adsorption BET utilisant du N₂, est de 10 à 500 m²/g ; et
la teneur en particules inorganiques contenant du lithium de l'électrolyte composite (5) est de 85 à 98 % en poids.

4. Batterie secondaire selon la revendication 2 ou 3, dans laquelle les particules inorganiques contenant du lithium contiennent des particules d'électrolyte solide inorganiques conductrices d'ions lithium.

5. Batterie secondaire selon l'une quelconque des revendications 2 à 4, dans laquelle les fibres polymères contiennent de la cellulose.

6. Batterie secondaire selon l'une quelconque des revendications 2 à 5, dans laquelle la couche contenant du matériau actif d'électrode négative (4b) contient un oxyde contenant du titane.

7. Batterie secondaire selon la revendication 6, dans laquelle l'oxyde contenant du titane contient au moins l'un parmi un oxyde de titane et de lithium ayant une structure spinelle, un oxyde de titane monoclinique et un oxyde de titane et de niobium.

8. Batterie secondaire selon l'une quelconque des revendications 2 à 7, qui comprend en outre un collecteur de courant (36) ayant une première surface et une seconde surface située à l'opposé de la première surface, et qui a une structure bipolaire dans laquelle la couche contenant du matériau actif d'électrode positive (37) est prévue sur la première surface du collecteur de courant (36) et la couche contenant du matériau actif d'électrode négative (38) est prévue sur la seconde surface.

9. Bloc-batterie (50) comprenant une ou plus de batteries secondaires (51), chacune selon l'une quelconque des revendications 2 à 8.

10. Bloc-batterie (50) selon la revendication 9, comprenant en outre un terminal de distribution d'énergie externe (57), et un circuit protecteur (56).

11. Bloc-batterie (50) selon la revendication 9 ou 10, comprenant deux batteries secondaires (51) ou plus, dans lequel les deux batteries secondaires (51) ou plus sont connectées électriquement en série, en parallèle ou dans une combinaison en série et en parallèle.

12. Véhicule (71) comprenant le bloc-batterie (72) selon l'une quelconque des revendications 9 à 11.

13. Véhicule (71) selon la revendication 12, qui comprend un mécanisme configuré pour convertir l'énergie cinétique du véhicule en énergie régénératrice.
